# EUROPEAN PATENT APPLICATION

(11) **EP 1 850 620 A1**
(43) Date of publication of application: **31.10.2007**
(21) Application number: 06711575.8
(22) Date of filing: 12.01.2006
(51) Int. Cl.: H04Q 7/38, H04Q 7/34, H04M 3/00

(54) **MOBILE COMMUNICATION NETWORK SUBSCRIBER INFORMATION MANAGEMENT SYSTEM, SUBSCRIBER INFORMATION MANAGEMENT METHOD, COMMUNICATION CONTROL DEVICE, COMMUNICATION TERMINAL, AND COMMUNICATION CONTROL METHOD**

(30) Priority: 26.01.2005 JP 2005018097; 28.01.2005 JP 2005020671; 31.03.2005 JP 2005103075; 31.03.2005 JP 2005103057
(71) Applicant: Sharp Kabushiki Kaisha, Osaka-shi, Osaka 545-8522 (JP)
(72) Inventor: MORIWAKI, Tetsuro, Saitama-shi, Saitama 330-0071 (JP); HIBI, Keiichi, Chiba 270-0034 (JP); YAMADA, Shohei, Chiba-shi, Chiba 261-0004 (JP); ARAMOTO, Masafumi, Tokyo 135-0042 (JP)
(74) Representative: Müller, Frithjof E.
(86) International application number: PCT/JP2006/300252
(87) International publication number: WO 2006/080195

(57) **Abstract**

By adding a public identifier for designating a PAN configured by a communication terminal owned by a user to subscriber information managed in a mobile communication network, it is possible to manage a plurality of communication terminals as a group. The mobile communication network 2 includes a communication control device 4 for managing subscriber information and performing communication control. A communication terminal #1 on which USIM 8 is mounted is connected to communication terminals #2 and #3 constituting PAN 7 together with the communication terminal #1. The communication control device 4 manages a public identifier for designating the communication terminal #1 for performing a call connection or a session connection to the communication terminal #1 and at least one public identifier for identifying the PAN 7 formed by the communication terminals #1, #2, and #3 while correlating them with the communication terminal #1 and to the public identifier for identifying the PAN 7, thereby managing profile information including configuration of the PAN 7 and the service attribute which can be used by the PAN 7.

## Description

### TECHNICAL FIELD

The present invention relates to a mobile communication network subscriber information management system, a subscriber information management method, a communication control device, a communication terminal, and a communication control method, and more particularly, to a system, a device, and a method to manage a plurality of communication terminals/devices as a group forming a PAN (Personal Area Network) and execute communication control between the communication terminals/devices by user operations or autonomous control of the communication terminals/devices.

### BACKGROUND OF THE INVENTION

In a mobile communication system such as the conventional GSM (Global System for Mobile Communications) or IMT-2000, user management is executed using an IC card called an SIM (Subscriber Identity Module) or a USIM (Universal Subscriber Identity Module) (hereinafter, "USIM card" collectively for the SIM or the USIM). When a user subscribes to a mobile communication service provided by a mobile communication provider, the user can use the mobile communication service by using a USIM card that the user has purchased from the provider or the provider supplied the user with.

More specifically, the user can access and use the mobile communication service that the user subscribes to by using a communication terminal as a user's own communication terminal by attaching the USIM card to the communication terminal.

The USIM card stores information on the user as a subscriber, and the user's identification information (the user's attribute information such as the user's present address, name, and the contents of the subscription contract for the user; and the attribute information of the communication terminal such as the address, and the telephone number; etc.). The user can handle the communication terminal as if the communication terminal has the identification information (such as the address, the telephone number, etc.) stored in the USIM card by attaching the USIM card to the communication terminal.

A communication control device provided in a mobile communication network to control the network manages the information of the USIM card and notifies the mobile communication network of the subscriber information and the identification information of the user that the USIM card attached to the communication terminal stores and registers those pieces of information in the network. Thereby, the network identifies the subscriber that uses the communication terminal, that is, the owner of the USIM card attached to the communication terminal. When the provider provides the communication service to the user, a communication control device processes establishment of a call and a session to the address or the telephone number of the USIM card such that the call arrives at or the session is established with the communication terminal that is attached with the USIM card.

For example, for a telephone service, a telephone number given to a user is managed correlated with not a communication terminal but a USIM card in a mobile communication network. When the USIM card is attached to a communication terminal, the communication terminal is handled as if the communication terminal has the telephone number of the user and a call made to the telephone number is processed such that the call arrives at the communication terminal. This management method using a USIM card has an advantage that the user can flexibly select an appropriate communication terminal depending on the user's own taste and the situation around him/her and use the communication terminal as a user's own communication terminal.

In a conventional mobile communication network, normally, attributes of a user (such as the present address, the name, the contents of the subscription contract) are managed in a 1:1 correlation with identification information of a communication terminal to which a USIM card is attached as subscriber identification information correlated with the identification information of the USIM card. The mobile communication network has a location managing function to support move of the communication terminal. When the communication terminal registers the location thereof, the network manages the identification information of a user who is using the communication terminal, in other words, the subscriber identification information of the owner of the USIM card that is attached to the communication terminal, correlating with the location information of the communication terminal. Therefore, the network can grasp who the present user of the communication terminal is and where the communication terminal is.

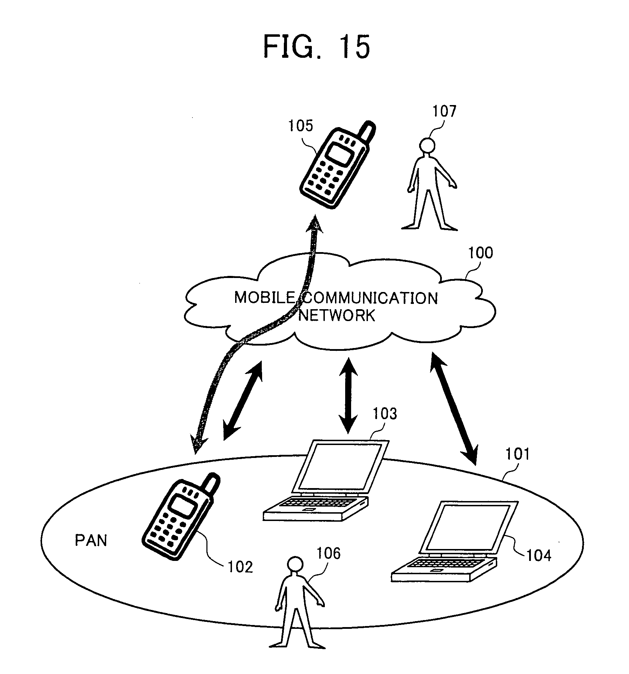

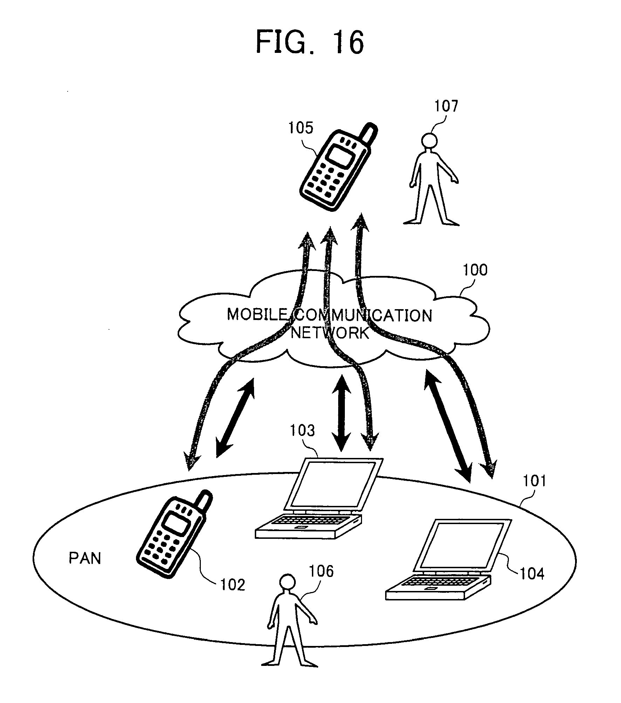

Fig. 15 is a schematic view of the configuration of a system including subscriber information management in a mobile communication network. In Fig. 15, 100 denotes a mobile communication network, 101 denotes a PAN, 102 to 105 denote communication terminals, and 106 and 107 denote users. Fig. 16 is a schematic view of another configuration of the system including the subscriber information management in the mobile communication network. In Figs. 15 and 16, the communication terminals 102, 103, and 104 constituting the PAN 101 are configured to be connectable to the communication terminal 105 through the mobile communication network 100.

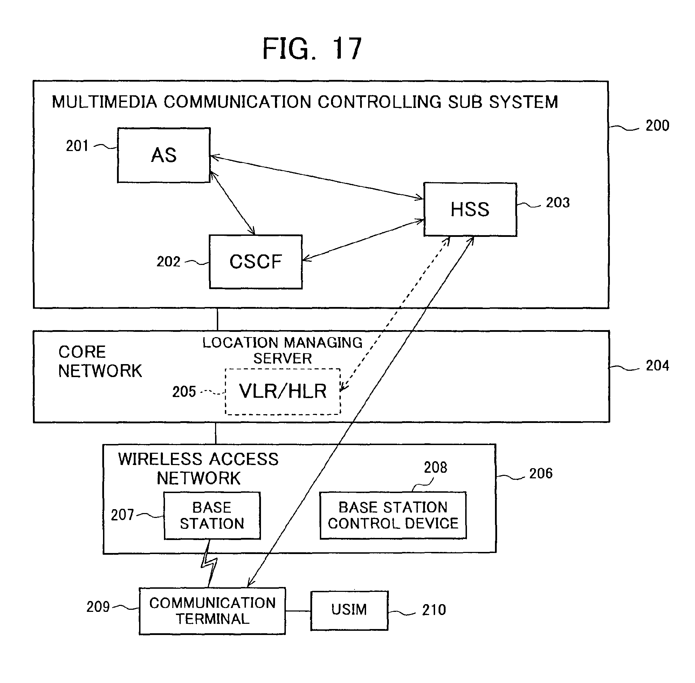

Fig. 17 is a schematic block diagram of the configuration of a system including subscriber information management, call control, and session control in a conventional mobile communication network. The mobile communication network is configured by a communication terminal 209, a wireless access network 206, a core network 204, a multimedia communication controlling sub system 200, etc. The communication terminal 209 is attached with a USIM card 210 as a device to execute subscriber identification of the user who is using the communication terminal 209. The wireless access network 206 is an access network that provides means for the communication terminal 209 to access the core network 204 through a wireless section, and is configured by a base station 207, a base-station-side control device 208, etc. The core network 204 is a combined network and controlling system that executes transmission of information among communication terminals, connection control, communication management, etc., and includes a VLR/HLR (Visited Location Register/Home Location Register) 205 that is a location managing server managing location management information of the communication terminal 209 and subscriber information of the user who is using the communication terminal 209.

The multimedia communication controlling sub system 200 is a sub system that aims at realizing an additional function to provide multimedia communication services based on the IP on a packet exchange system of the core network 204. The multimedia communication controlling sub system 200 is configured by an AS (Application Server) 201 that is an application server, a CSCF (Call Session Control Function) 202 that provides a session control function among the communication terminals, an HSS (Home Subscriber Server) 203 that is a subscriber information management device, etc.

The network employs the SIP (Session Initiation Protocol) as the session controlling protocol. The CSCF 202 provides a controlling function for the state of calls and sessions among the communication terminals; and interacts with the user at the SIP or the HSS 203 that functions as a registration server of the communication terminal 209, executes registering processes of the state and identification information of a user who can use services/be communicated with, and executes connection control of sessions by managing and transmitting information to control the sessions.

By using the basic functions provided by the multimedia communication controlling sub system 200, the AS 201 is provided that provides higher-degree application services to users. The CSCF 202 also has an interface means to notify the AS 201 of information on the sessions and the users/terminals and accept control of the sessions by the AS 201.

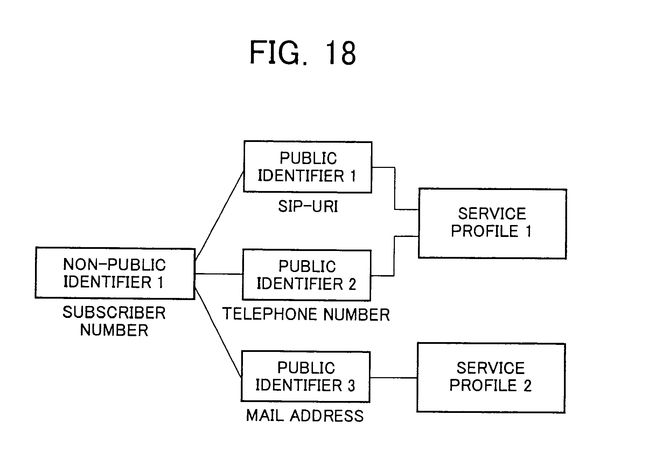

Referring to Fig. 18, description will be given for the overview of the subscriber information managed by the HSS 203, etc., in a conventional mobile communication network. As shown in Fig. 18, the subscriber information of the conventional mobile communication network is configured hierarchically by a non-public identifier, public identifiers, a service profile, etc. The non-public identifier is unique identification information (ID) that a communication service provider uses to execute subscriber management (registration/management of subscribers and usable services, approval of accesses to the services, billing, etc.).

In Fig. 18, it is enough for a non-public identifier 1 to be able to manage using an information scheme that is not open to the exterior of the system or a proprietary information scheme because of the nature of the network that the identifier can only be used by the communication service provider within the system to manage the subscriber thereof and for the security to protect the subscriber information. Therefore, the non-public identifier 1 is managed in a scheme, for example, called "NAI (Network Access Identifier). The non-public identifier 1 includes subscriber identification numbers used for the multimedia communication controlling sub system 200. This is because it is necessary to manage, for example, the subscriber information for basic communication services such as the telephone and the subscriber information for the multimedia services distinguishing those pieces of information from each other since the multimedia communication control is provided as a sub system in this system configuration. Only one non-public identifier 1 is uniquely assigned to one USIM card 210.

Public identifiers 1 to 3 are IDs that users use disclosing these identifiers 1 to 3 when the users receive services or when the users communicate with other users, and include, for example, telephone numbers, mail addresses, SIP-URIs, etc. Though one USIM card 210 needs to have at least one public identifier, the card 210 may have a plurality of public identifiers. Not all the public identifiers need to be stored in the USIM card 210 and all the public identifiers may be managed correlated with the USIM.

The service profile is a set of pieces of information on the services that the users subscribe to and can use, and includes information such as attributes and conditions for provision of the services at the users and the communication service provider. This service profile is managed and stored, being correlated with one or more public identifier(s) used when a user uses the services. On the other hand, each of the public identifiers is correlated with only one service profile.

The above pieces of subscriber information are transferred and stored from the HSS 203 to the CSCF 202 when the communication terminal 209 is registered in the multimedia communication controlling sub system 200, and are also provided from the HSS 203 to the AS 201. The HSS 203 that manages these pieces of subscriber information is an HSS installed in a home domain (a mobile communication network provided by a communication service provider to which a subscriber subscribes) of the USIM that the user owns.

Description will be given for a case where a communication terminal establishes a session with another communication terminal. When a communication terminal starts communication with a counterpart communication terminal, the communication terminal requests to the CSCF to make a call and to establish a session by sending a call connection request and a session connection request that each include designation of a public identifier of the counterpart communication terminal to a mobile communication network. When the CSCF receives a call making request and the session connection request, the CSCF confirms that the public identifier of the counterpart communication terminal included in these requests is valid, authentication of the communication terminal of the call origin and the user, the requested services can be provided, etc., by referring to subscriber information that an HSS manages and, thereby, confirms that the call connection request and the session connection request are valid and can be processed.

Thereafter, by sending the call connection request and the session connection request to the counterpart communication terminal, the CSCF controls such that connection of a call and connection of a session are executed between the counterpart communication terminal and the communication terminal of the call origin. For the public identifier of the counterpart communication terminal designated in the call connection request or the session connection request, the CSCF only executes reference and confirmation thereof and does not execute processes such as rewriting to a public identifier of another communication terminal.

When the CSCF accepts the session connection request, the CSCF further refers to a service profile that is managed by the HSS being correlated with the public identifier designated in this request and, when, thereby, the call origin communication terminal and the counterpart communication terminal described in the service profile are usable; or further refers to the contents, attribute, conditions, etc., of services that can be provided to these communication terminals and, when, thereby, the session requested in the session connection request matches these items, the CSCF controls such that the session connection is executed. At this time, the CSCF can also control such that a session connection for which the contents, type, etc., thereof are changed to conform to the description of the service profile.

Various suggestions have been made concerning the subscriber information management and the communication controlling techniques in a conventional communication network (see, for example, Patent Documents 1, 2, and 3).

Patent Document 1 describes an invention according to which, when a first terminal makes a call using a predetermined number that does not designate any connection number of another specific terminal, a switching network control device in a network once connects the call with a connection terminal selecting device and, thereafter, disconnects the call; and, thereafter, similarly, when a second terminal makes a call using the predetermined number that does not designate any connection number of another specific terminal, notifies the second terminal of the presence of the first terminal and the connection number thereof and disconnects the call; and, thereby, allows the second terminal to connect a call by designating the connection number of the first terminal and enables communication connection that does not identify a terminal at which a call arrives.

Patent Document 2 describes an invention according to which, in addition to subscriber information of a SIM that a mobile communication terminal uses to communicate in a mobile communication network, identification information to allow use of the subscriber information is registered and the identification information and the subscriber information are notified of from a terminal to another terminal using a wireless communication means of the Blue Tooth (a registered trademark) scheme and, thereby, the same subscriber information can be shared among a plurality of terminals.

Patent Document 3 describes an invention according to which a housing that can execute video and audio communication (terminal body) and another housing that can execute only audio communication (handset) are separately configured and both of the housings are connected by a wireless line for the handset.
Patent Document 1: Japanese Laid-Open Patent Publication No. 2001-197148
Patent Document 2: Japanese Laid-Open Patent Publication No. 2002-078014
Patent Document 3: WO98/39906

### DISCLOSURE OF THE INVENTION

### PROBLEMS TO BE SOLVED BY THE INVENTION

The above conventional subscriber information management method employs a USIM card and identification information thereof as criteria. That is, it is assumed only that one user owns one USIM card and uses one communication terminal attached with the USIM card. Therefore, services can only be provided on a precondition that the number of terminal that a user owns is one. This is not so problematic when the number of communication terminals that are owned by a user and can access a mobile communication network is only one and the communication is based on services such as audio calls and simple email like a conventional portable telephone.

In the conventional communication controlling scheme, though a public identifier consisting of address information designated when a call connection or a session connection is requested is managed by an HSS and a CSCF, the public identifier of a counterpart communication terminal needs to be known in a communication terminal of the call origin and the call origin communication terminal needs to include the public identifier into the call connection request and the session connection request. That is, problems have arisen that the call origin communication terminal needs in advance to identify the counterpart communication terminal to send the call connection request and the session connection request, and the CSCF can only execute management and control only for a connection between designated communication terminals and, therefore, the CSCF lacks flexibility and can not provide high-degree services.

However, in a future mobile communication network, when high quality multimedia services and high-degree services formed by complicatedly combining various functions will be provided, desire will occur to a user that the user wants to own a plurality of communication terminals and devices that can access a mobile communication network and services thereof and wants to use each of or in a combination those communication terminals and the devices according to the situation of the user, the contents of the service, the communication counterpart, desired quality, etc., and, thereby, wants to enjoy the sufficient quality and performance of the services.

For example, it is considered that, when a user owns a plurality of communication terminals and devices, by the operation of the user or autonomous control of the communication terminals/devices, a small-scale network of a group of the communication terminals/devices (hereinafter, "PAN") is formed and these terminals/devices communicate through the PAN and, thereby, calls and sessions are transferred in response to desire that the user wants to share the functions depending on the characteristics of each of the terminals/devices and use each of the terminals that the user uses according to the capacity and attribute.

Desire has occurred also to a service provider or a communication service provider that, by managing and controlling collectively as a group the communication terminals/devices owned by one same user and constituting a PAN, the service provider or the communication service provider wants to enable provision of high-degree services taking into account the attribute and the capacity of each of the plurality of communication terminals owned by the user and, by providing services that can cope with the above desire of the user, wants to facilitate improvement of the convenience and wants to provide efficient services that can match the characteristics of the mobile communication network and resource assignment.

However, as above, the conventional subscriber information management method and the communication control method are based on management information employing as a precondition the 1:1 correlation between one communication terminal attached with a USIM card and the user who owns and uses the USIM card, and, therefore, it is difficult to grasp that the user owns a plurality of communication terminals, inversely, to grasp that a plurality of communication terminals belong to one same user and, even when the plurality of communication terminals that the user owns constitute a PAN, it is difficult for the mobile communication network to control communication handling the communication terminals constituting the PAN as a group. The problems in the conventional system are as follows.

(1) Only communication control by limiting to one communication terminal or communication control by correlating the communication terminal and the user at 1: 1 can be executed.
(2) Profile information necessary to control communication handling communication terminals constituting a PAN as a group, for example, information such as the network configuration of the PAN constituted by the communication terminals, a session capacity that can be realized by combining a plurality of communication terminals, preference, etc., can not be managed.
(3) Control for a communication terminal other than a communication terminal attached with a USIM to access services can not be executed even when the communication terminals are owned by the same one user.
(4) Control to select freely a terminal with which a user uses a service can not be executed.

More specifically, for example, a problem has arisen that, in the above Fig. 15, even in the case where the user 106 owns or can use a plurality of communication terminals, when the other user 107 requests establishment of a session to the user 106, the user 107 needs to make a call after identifying in advance one of the communication terminals owned by the user 106 and can not use the optimal one of the communication terminals that the user 106 owns and can use. Another problem has arisen that the user 106 can not use a service according to the type of the service and a processing capacity necessary for the service after selecting the optimal one of the communication terminals owned by the user 106.

For example, the invention described in Patent Document 1 enables making a call that does not identify any terminal for the call to arrive at but designates a predetermined number. However, after the terminal that made the call using the predetermined number has been notified of the presence of another communication terminal and the connection number thereof, the terminal that made the call needs to again make a call designating the notified connection number. Therefore, the communication control device in the network only selects the call destination and connects the call, and the communication terminals do not form any PAN and any call connection and any session connection between the PAN and the communication counterpart are not executed.

The invention described in Patent Document 2 enables substitution of manually attaching and removing of the SIM to/from a mobile communication terminal and, using the identification information, does not permit simultaneous use of the subscriber information at a plurality of terminals, assuming that the correlation of the subscriber information and the communication terminal is 1:1 in any case. Therefore, this invention does not simultaneously manage and control the plurality of communication terminals as a group.

According to the invention described in Patent Document 3, when the receiving terminal has received the call control message including communication type information representing a video and audio communication from the transmitting terminal, the receiving terminal detects that the communication is a video and audio communication and, thereafter, notifies the transmitting terminal of whether receiving mode is for a video and audio or only audio and, by controlling the communication type, the transmitting terminal can output the video and audio at the terminal body or can output only audio at the handset and, during communication, switching of the designated receiving mode is enabled by an operation on the receiving communication terminal body. Therefore, control of the communication type is basically left to the transmitting terminal and the communication control device in the network does not detect the type of the session and does not execute any dividing control of the session.
When the communication is established by a handset, the terminal body is caused to intervene in the establishment and the communication is established on the wireless line for the handset. Therefore, each of the communication terminals in the PAN can not establish independently any session with the transmitting terminal.
The invention executes switching of the communication type and switching of the receiving terminal by the interaction between the transmitting terminal and the receiving terminal and the interaction between the receiving terminal body and the handset, and does not manage and control distinguishing the terminal body and the handset in the network.

The present invention was conceived in view of the above situation and an object thereof is to provide a mobile communication system that adds and manages a public identifier to designate and identify a PAN constituted by communication terminals/devices that a user owns; manages the identification information of each of the communication terminals constituting the PAN and the profile information necessary for handling the PAN such as the network configuration of the PAN, preference of the communication terminals to recommend the use thereof corresponding to the service, correlating those pieces of information with the public identifier to designate the PAN; and, by configuring the communication control device to control a call connection or a session connection referring to those pieces of information and enabling the plurality of communication terminals to be controlled for communication as a group, enables a user to select freely and flexibly a proper communication terminal in the PAN to use services, to combine the plurality of terminals to use one service, to cause a call or a session establishment request from a counterpart user to arrive at the optimal communication terminal.

Another object of the present invention is to provide a mobile communication system that, by managing priority information, etc., of a communication terminal to be used depending on the type and the attribute of a service as the profile information of the PAN, the optimal communication terminal for a service can be easily and properly selected and determined and, thereby, facilitates improvement of the convenience for the user, use of services with the optimal quality, and effective use of capacities that a communication terminal has.

### MEANS FOR SOLVING THE PROBLEMS

To solve the above problems, a first technical means of the present invention is a mobile communication network subscriber information management system, comprising a means of managing, in addition to public identification information that designates a communication terminal to execute a call connection or a session connection with the communication terminal connected with the mobile communication network, at least one piece of public identification information for the communication terminal to identify a group that the communication terminal constitutes together with other communication terminals, in association with the communication terminal.

A second technical means is the mobile communication network subscriber information management system as defined in the first technical means, wherein the other communication terminals that constitute the group together with the communication terminal are communication terminals that constitute a network by being connected with the communication terminal and wherein one or more pieces of public identification information for the group is(are) public identification information that identifies(y) the network.

A third technical means is the mobile communication network subscriber information management system as defined in the first or second technical means, wherein profile information that includes the configuration of the group or the network and attributes of services that can be used by the group or the network is managed, being correlated with the public identification information to identify the group or the network.

A fourth technical means is the mobile communication network subscriber information management system as defined in the third technical means, wherein the profile information includes at least public identification information comprising address information that is used when a connection is requested to each of the communication terminals constituting the group or the network.

A fifth technical means is the mobile communication network subscriber information management system as defined in the fourth technical means, wherein the profile information includes at least information that indicates whether each of the communication terminals constituting the group or the network has a means of connecting to the mobile communication network.

A sixth technical means is the mobile communication network subscriber information management system as defined in the fourth technical means, wherein the profile information includes information that indicates priority given when one of connection paths to the mobile communication network is selected to communicate for each of the communication terminals constituting the group or the network.

A seventh technical means is the mobile communication network subscriber information management system as defined in the fourth technical means, wherein the profile information includes information that indicates priority depending on the contents and the type of communication given when each of the communication terminals constituting the group or the network selects one of the connection paths to the mobile communication network to communicate.

An eighth technical means is the mobile communication network subscriber information management system as defined in the fourth technical means, wherein the profile information includes information that indicates priority representing which communication terminal should be used to communicate depending on the contents and the type of the communication when the communication terminal constituting the group or the network communicates.

A ninth technical means is the mobile communication network subscriber information management system as defined in the first or second technical means, wherein when a group or a network that the communication terminal constitutes together with the other communication terminals includes a first communication terminal having a means to connect to the mobile communication network, the system manages one or more pieces of public identification information to identify the group or the network correlating the one or more pieces of public identification information with both of the communication terminal and the first communication terminal.

A tenth technical means is a mobile communication network subscriber information management method, comprising the step of managing, in addition to public identification information that designates a communication terminal to execute a call connection or a session connection with the communication terminal connected with the mobile communication network, at least one piece of public identification information for the communication terminal to identify a group that the communication terminal constitutes together with other communication terminals, in association with the communication terminal.

An eleventh technical means is the mobile communication network subscriber information management method as defined in the tenth technical means, wherein the other communication terminals that constitute the group together with the communication terminal are communication terminals that constitute a network by being connected with the communication terminal and wherein one or more pieces of public identification information for the group is (are) public identification information that identifies(y) the network.

A twelfth technical means is the mobile communication network subscriber information management method as defined in the tenth or eleventh technical means, wherein profile information is managed that includes the configuration of the group or the network and attributes of services that can be used by the group or the network, being correlated with the public identification information to identify the group or the network.

A thirteenth technical means is the mobile communication network subscriber information management method as defined in the twelfth technical means, wherein the profile information includes at least public identification information comprising address information that is used when a connection is requested to each of the communication terminals constituting the group or the network.

A fourteenth technical means is the mobile communication network subscriber information management method as defined in the thirteenth technical means, wherein the profile information includes at least information that indicates whether each of the communication terminals constituting the group or the network has a means of connecting to the mobile communication network.

A fifteenth technical means is the mobile communication network subscriber information management method as defined in the thirteenth technical means, wherein the profile information includes information that indicates priority given when one of connection paths to the mobile communication network is selected to communicate for each of the communication terminals constituting the group or the network.

A sixteenth technical means is the mobile communication network subscriber information management method as defined in the thirteenth technical means, wherein the profile information includes information that indicates priority depending on the contents and the type of communication given when each of the communication terminals constituting the group or the network selects one of the connection paths to the mobile communication network to communicate.

A seventeenth technical means is the mobile communication network subscriber information management method as defined in the thirteenth technical means, wherein the profile information includes information that indicates priority representing which communication terminal should be used to communicate depending on the contents and the type of the communication when the communication terminal constituting the group or the network communicates.

An eighteenth technical means is the mobile communication network subscriber information management method as defined in the tenth or eleventh technical means, wherein when a group or a network that the communication terminal constitutes together with the other communication terminals includes a first communication terminal having a means to connect to the mobile communication network, one or more pieces of public identification information to identify the group or the network is managed being correlated with both of the communication terminal and the first communication terminal.

A nineteenth technical means is a communication control device comprising a session controlling means that manages/controls a call connection or a session connection between communication terminals and a subscriber information management means that manages subscriber information of a mobile communication network, wherein the subscriber information management means manages at least one piece of public identification information to identify a group that a communication terminal connectable to the mobile communication network constitutes to be able to network-connect to other communication terminals, correlating the public identification information with the communication terminal and wherein when a call connection request or a session establishment request is executed from a first communication terminal not included in the group or the network designating public identification information that identifies the group or the network, the session controlling means accepts the call connection request or the session establishment request, refers to the public identification information designated from the subscriber information and information correlated with the public identification information managed by the subscriber information management means, selects at least one of communication terminals constituting the group or the network, and executes a call connection or a session connection between the selected communication terminal and the first communication terminal using public identification information of the selected communication terminal.

A twentieth technical means is the communication control device as defined in the nineteenth technical means, wherein the device refers to priority information of a connection path and a communication terminal to be used and information on the contents or the type of communication designated by the call connection request or the session establishment request, from information correlated with public identification information of the group or the network, selects at least one connection path from the group or the network to the mobile communication network and at least one communication terminal to be used in the communication, and executes a call connection or a session connection between the selected communication terminal and the first communication terminal through the selected connection path.

A twenty-first technical means is the communication control device as defined in the nineteenth or twentieth technical means, further comprising a means of dividing the requested call connection or the session establishment into a plurality of call connections or sessions to a plurality of communication terminals that constitute the group or the network depending on the priority information of the connection path and the communication terminal to be used and information on the contents or the type of the communication, and connecting the connections or the sessions.

A twenty-second technical means is the communication control device as defined in any one of the nineteenth to twenty-first technical means, wherein when a call connection request or a session establishment request is executed that designates public identification information that identifies any one of the communication terminals constituting the group or the network, the session controlling means accepts the call connection request or the session establishment request, refers to the public identification information designated from the subscriber information and information correlated with the public identification information managed by the subscriber information management means, selects at least one of the communication terminals constituting the group or the network, and executes a call connection or a session connection between the selected communication terminal and the first communication terminal using public identification information of the selected communication terminal.

A twenty-third technical means is the communication control device as defined in the twenty-second technical means, comprising a means of determining public identification information that identifies the group or the network constituted by the communication terminal designated from the subscriber information managed by the subscriber information management means when the session controlling means has received a call connection request or a session establishment request that designates public identification information that identifies any one of the communication terminals constituting the group or the network, wherein the session controlling means refers to the public identification information determined from the subscriber information and information correlated with the public identification information.

A twenty-fourth technical means is a communication control device that controls a connection between communication terminals in a mobile communication network, comprising a means of managing one or more pieces of public identification information to identify a group that a communication terminal connectable to the mobile communication network constitutes together with other communication terminals, a means of accepting a call connection request or a session connection request that designates public identification information that identifies the group from a first communication terminal, a means of selecting at least one communication terminal of the communication terminals constituting the group from public identification information that identifies the group, and a means of sending to the communication terminal a call connection request or a session connection request that designates public identification information comprising address information used when a connection is requested to the selected communication terminal.

A twenty-fifth technical means is the communication control device as defined in the twenty-fourth technical means, wherein the communication control device of the public identification information manages public identification information of each of the communication terminals constituting the group correlating the public identification information with public identification information to identify the group, selects at least one piece of public identification information from public identification information of each of the communication terminals correlated with public identification information that identifies the group when the communication control device receives a call connection request or a session connection request that designates public identification information that identifies the group, and sends a call connection request or a session connection request that designates the public identification information.

A twenty-sixth technical means is the communication control device as defined in the twenty-fourth or twenty-fifth technical means, wherein the other communication terminals that constitute the group together with the communication terminal are communication terminals that constitute a network by being connected to the communication terminal and wherein one or more pieces of public identification information for the group is(are) public identification information that identifies(y) the network.

A twenty-seventh technical means is the communication control device as defined in the twenty-sixth technical means, wherein session establishment condition information that indicates the contents and the type of sessions that can be processed and/or used by each of the communication terminals constituting the group or the network is managed being correlated with the public identification information to identify the group or the network, and the session establishment condition information is referred to when at least one communication terminal is selected.

A twenty-eighth technical means is the communication control device as defined in the twenty-sixth or twenty-seventh technical means, wherein profile information that includes the attributes of services that can be used by the group or the network is managed, being correlated with the public identification information to identify the group or the network and wherein when a call connection request or a session connection request that designates public identification information that identifies the group or the network is received, the profile information is referred to and a communication terminal is selected that can provide the requested call connection or session connection.

A twenty-ninth technical means is the communication control device as defined in the twenty-seventh technical means, wherein when a call connection request or a session connection request that designates public identification information that identifies the group or the network is received, the session establishment condition information is referred to, the plurality of communication terminals constituting the group or the network are selected, and the call connection request or the session connection request that designates public identification information of the communication terminals is sent and, thereby, the received call connection request or session connection request is divided into a plurality of calls or sessions respectively having different types and the divided calls or sessions are connected to the plurality of communication terminals.

A thirtieth technical means is the communication control device as defined in the twenty-sixth technical means, wherein when a call connection request or a session connection request that designates public identification information that identifies the group or the network is received, public identification information of all the communication terminals correlated with public identification information that identifies the group or the network is referred to, and a call connection request or a session connection request that designates public identification information of the communication terminal is sent to each of all the communication terminals.

A thirty-first technical means is the communication control device as defined in the thirtieth technical means, wherein at least one of the communication terminals that has responded to the call connection request or the session connection request to each of all the communication terminals constituting the group or the network is selected, and a call connection or a session connection with the selected communication terminal is executed.

A thirty-second technical means is the communication control device as defined in any one of the twenty-fourth to thirty-first technical means, wherein when a call connection request or a session connection request that designates public identification information that identifies any one of the communication terminals constituting the group or the network is received, at least one of the communication terminals constituting the group or the network that is correlated with the public identification information is selected, and a call connection request or a session connection request that designates public identification information of the selected communication terminal is sent.

A thirty-third technical means is the communication control device as defined in the thirty-second technical means, further comprising a means of determining public identification information that identifies the group or the network that is correlated with the public identification information when a call connection request or a session connection request that designates public identification information that identifies any one of the communication terminals constituting the group or the network is received.

A thirty-fourth technical means is a communication terminal that is connected to a mobile communication network and that has a means of requesting a call connection or a session connection with other communication terminals, comprising a means, when the means requests to a group constituted by the other communication terminals a call connection or a session connection with any one of the other communication terminals constituting the group, of sending a call connection request or a session connection request that designates public identification information that identifies the group.

A thirty-fifth technical means is the communication terminal as defined in the thirty-fourth technical means, wherein at least one of the other communication terminals constituting the group is a first communication terminal that can connect to the mobile communication network, wherein a network is constituted by connecting the first communication terminal and other communication terminals, and wherein public identification information for the group is public identification information that identifies the network.

A thirty-sixth technical means is a communication control method of a communication control device comprising a means of managing/controlling a call connection or a session connection between communication terminals and a means of managing subscriber information of a mobile communication network, comprising the steps of: having, including in the subscriber information, at least one piece of public identification information to identify a group that a communication terminal connectable to the mobile communication network constitutes to be able to network-connect to other communication terminals, correlating the public identification information with the communication terminal; when a call connection request or a session establishment request is executed from a first communication terminal not included in the group or the network designating public identification information that identifies the group or the network, accepting the call connection request or the session establishment request; referring to the public identification information designated from the subscriber information and information correlated with the public identification information; selecting at least one of communication terminals constituting the group or the network; and executing a call connection or a session connection between the selected communication terminal and the first communication terminal using public identification information of the selected communication terminal.

A thirty-seventh technical means is the communication control method as defined in the thirty-sixth technical means, further comprising the steps of: referring to priority information of a connection path and a communication terminal to be used and information on the contents or the type of communication designated by the call connection request or the session establishment request, from information correlated with public identification information of the group or the network; selecting at least one connection path from the group or the network to the mobile communication network and at least one communication terminal to be used in the communication; and executing a call connection or a session connection between the selected communication terminal and the first communication terminal through the selected connection path.

A thirty-eighth technical means is the communication control method as defined in the thirty-sixth or thirty-seventh technical means, further comprising the steps of: dividing the requested call connection or the session establishment into a plurality of call connections or sessions to a plurality of communication terminals that constitute the group or the network respectively depending on the priority information of the connection path and the communication terminal to be used and information on the contents or the type of the communication; and connecting the connections or the sessions.

A thirty-ninth technical means is the communication control method as defined in any one of the thirty-sixth to thirty-eighth technical means, further comprising the steps of: when a call connection request or a session establishment request is executed that designates public identification information that identifies any one of the communication terminals constituting the group or the network, accepting the call connection request or the session establishment request; referring to the public identification information designated from the subscriber information and information correlated with the public identification information; selecting at least one of the communication terminals constituting the group or the network; and executing a call connection or a session connection between the selected communication terminal and the first communication terminal using public identification information of the selected communication terminal.

A fortieth technical means is the communication control method as defined in the thirty-ninth technical means, further comprising the steps of: determining public identification information that identifies the group or the network constituted by the communication terminal designated from the subscriber information when a call connection request or a session establishment request that designates public identification information that identifies any one of the communication terminals constituting the group or the network is received; and referring to the determined public identification information and information correlated with the public identification information.

A forty-first technical means is a communication control method of a communication control device that controls a connection between communication terminals in a mobile communication network, comprising the steps of: managing and having one or more pieces of public identification information to identify a group that a communication terminal connectable to the mobile communication network constitutes together with other communication terminals; accepting a call connection request or a session connection request that designates public identification information that identifies the group from a first communication terminal; selecting at least one communication terminal of the communication terminals constituting the group from public identification information that identifies the group; and sending to the communication terminal a call connection request or a session connection request that designates public identification information comprising address information used when a connection is requested to the selected communication terminal.

A forty-second technical means is the communication control method as defined in the forty-first technical means, further comprising the steps of: managing public identification information of each of the communication terminals constituting the group correlating the public identification information with public identification information to identify the group; selecting at least one piece of public identification information from public identification information of each of the communication terminals correlated with public identification information that identifies the group when a call connection request or a session connection request that designates public identification information that identifies the group is received, and sending a call connection request or a session connection request that designates the public identification information.

A forty-third technical means is the communication control method as defined in the forty-first or forty-second technical means, wherein the other communication terminals that constitute the group together with the communication terminal are communication terminals that constitute a network by being connected to the communication terminal and wherein one or more pieces of public identification information for the group is(are) public identification information that identifies(y) the network.

A forty-fourth technical means is the communication control method as defined in the forty-third technical means, further comprising the steps of: managing session establishment condition information that indicates the contents and the types of sessions that can be processed and/or used by each of the communication terminals constituting the group or the network correlating the session establishment condition information with the public identification information to identify the group or the network; and referring to the session establishment condition information when at least one communication terminal is selected.

A forty-fifth technical means is the communication control method as defined in the forty-third or forty-fourth technical means, further comprising the steps of: managing profile information that includes the attributes of services that can be used by the group or the network, correlating the profile information with the public identification information to identify the group or the network; when a call connection request or a session connection request that designates public identification information that identifies the group or the network is received, referring to the profile information; and selecting a communication terminal that can provide the requested call connection or session connection.

A forty-sixth technical means is the communication control method as defined in the forty-fourth technical means, further comprising the steps of: when a call connection request or a session connection request that designates public identification information that identifies the group or the network is received, referring to the session establishment condition information; selecting the plurality of communication terminals constituting the group or the network; sending the call connection request or the session connection request that designates public identification information of the communication terminals; thereby, dividing the received call connection request or session connection request into a plurality of calls or sessions respectively having different types; and connecting the divided calls or sessions to the plurality of communication terminals.

A forty-seventh technical means is the communication control method as defined in the forty-third technical means, further comprising the steps of: when a call connection request or a session connection request that designates public identification information that identifies the group or the network is received, referring to public identification information of all the communication terminals correlated with public identification information that identifies the group or the network; and sending a call connection request or a session connection request that designates public identification information of the communication terminal to each of all the communication terminals.

A forty-eighth technical means is the communication control method as defined in the forty-seventh technical means, further comprising the steps of: selecting at least one of the communication terminals that has responded to the call connection request or the session connection request to each of all the communication terminals constituting the group or the network; and executing a call connection or a session connection with the selected communication terminal.

A forty-ninth technical means is the communication control method as defined in any one of the forty-first to forty-eighth technical means, further comprising the steps of: when a call connection request or a session connection request that designates public identification information that identifies any one of the communication terminals constituting the group or the network is received, selecting at least one of the communication terminals constituting the group or the network that is correlated with the public identification information; and sending a call connection request or a session connection request that designates public identification information of the selected communication terminal.

A fiftieth technical means is the communication control method as defined in the forty-ninth technical means, further comprising the step of when a call connection request or a session connection request that designates public identification information that identifies any one of the communication terminals constituting the group or the network is received, determining public identification information that identifies the group or the network correlated with the public identification information.

### EFFECT OF THE INVENTION

According to the present invention, in a mobile communication network, management can be executed not only by 1:1 correlation between a communication terminal and a user but also with concept of a group as the communication terminals that the user owns and, therefore, the user can be identified with a subscriber identifier by a USIM card, however, the communication terminal attached with the USIM card and other communication terminals constituting a PAN can be managed correlating the terminal and the other terminals, and a plurality of communication terminals can be used by one USIM card.
In a mobile communication network, conventionally, a user is only identified by a subscriber identifier by a USIM card, and only control of the communication such as a call connection or a session connection using a public identifier corresponding to the subscriber identifier is executed. Whereas, a communication terminal and a user can be managed not only by a 1: 1 correlation but also with a concept of a group as communication terminals that the user owns, and a public identifier is assigned to a group of the communication terminals. Therefore, a user who makes a call can designate not a specific communication terminal of the counterpart but the communication terminals that the user owns, indirectly, a counterpart user that the user wants to communicate with and can request a call connection or a session connection. Therefore, communication in the form of user to user can be controlled and, therefore, improvement of flexibility and convenience of communication services and upgrading of functions can be realized to both of the users respectively on the call making side and the call arriving side.

### BRIEF DESCRIPTION OF THE DRAWINGS

[Fig. 1] Fig. 1 is a schematic view of an exemplary configuration of a mobile communication network system that is an embodiment of the present invention.
[Fig. 2] Fig. 2 is a diagram for explaining an exemplary configuration of subscriber information including information to manage a PAN in the present invention.
[Fig. 3] Fig. 3 is a diagram for explaining another exemplary configuration of the subscriber information including the information to manage the PAN in the present invention.
[Fig. 4] Fig. 4 is a diagram for explaining yet another exemplary configuration of the subscriber information including information to manage a PAN in the present invention.
[Fig. 5] Fig. 5 is a diagram for explaining a detailed example of terminal information included in profile information of the PAN.
[Fig. 6] Fig. 6 is a diagram for explaining a detailed example of a priority map managed as the profile information of the PAN.
[Fig. 7] Fig. 7 is a flowchart for explaining an exemplary communication control method that is applicable with the present invention.
[Fig. 8] Fig. 8 is a schematic diagram of an exemplary configuration of a mobile communication network system that is another embodiment of the present invention.
[Fig. 9] Fig. 9 is a schematic diagram of exemplary configuration of subscriber information including information to manage the PAN in the present invention.
[Fig. 10] Fig. 10 is a diagram of an example of the contents of a PAN profile.
[Fig. 11] Fig. 11 is a diagram of an exemplary state where the PAN profile is registered in the mobile communication network.
[Fig. 12] Fig. 12 is a diagram of an exemplary state where a session connection is executed with a communication terminal constituting the PAN.
[Fig. 13] Fig. 13 is a diagram of another exemplary state where a session connection is executed with the communication terminal constituting the PAN.
[Fig. 14] Fig. 14 is a diagram of yet another exemplary state where a session connection is executed with the communication terminal constituting the PAN.
[Fig. 15] Fig. 15 is a schematic diagram of the configuration of a system including subscriber information management in the mobile communication network.
[Fig. 16] Fig. 16 is a schematic diagram of another configuration of the system including subscriber information management in the mobile communication network.
[Fig. 17] Fig. 17 is a block diagram of a schematic configuration of a system including subscriber information management, call control, and session control in a conventional mobile communication network.
[Fig. 18] Fig. 18 is a schematic diagram of subscriber information managed by an HSS, etc., in the conventional mobile communication network.

### EXPLANATIONS OF REFERENCE NUMERALS

1, 201...application server (AS); 2, 100...mobile communication network; 3, 204...core network; 4...communication control device; 4a...session controlling means; 4b...subscriber information management means; 4c...subscriber information database; 5a to 5c, 206...wireless access network; 6...wireless section; 7, 101...PAN; 8, 210...USIM card; 102 to 105, 209...communication terminal; 106, 107...user; 200...multimedia communication controlling sub system; 202...session control device (CSCF); 203...subscriber information management device (HSS); 205...location managing server (VLR/HLR) ; 207...base station; and 208...base station control device.

### PREFERRED EMBODIMENTS OF THE INVENTION

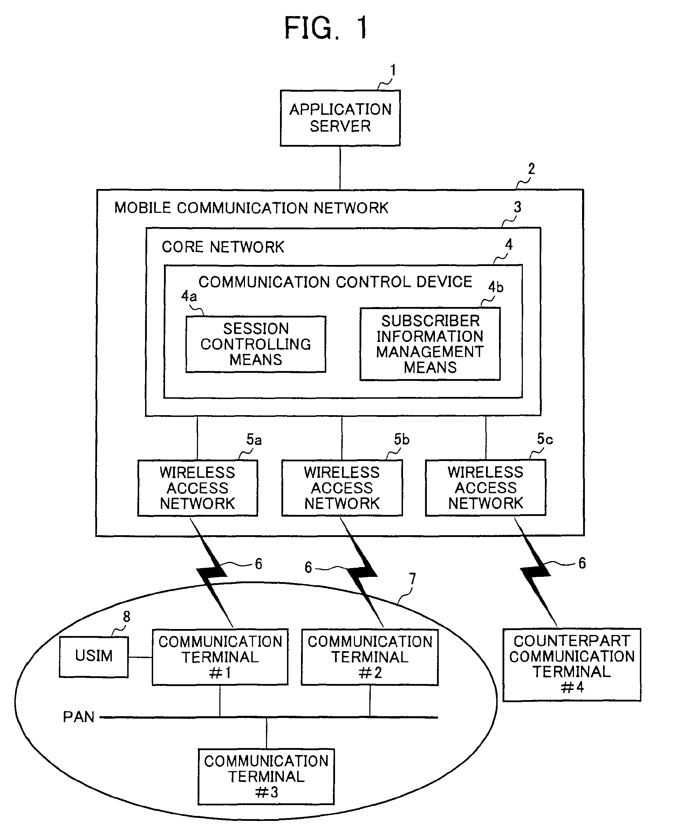

Fig. 1 is a schematic view of an exemplary configuration of a mobile communication network system that is an embodiment of the present invention. In Fig. 1, "1" denotes an application server, "2" denotes a mobile communication network, "3" denotes a core network, "4" denotes a communication control device, "5a" to "5c" denote wireless access networks, "6" denotes a wireless section, "7" denotes a PAN, and "8" denotes a USIM card. Communication terminals #1 to #3 constitute the PAN 7. The communication terminal #1 is attached with a USIM card 8 and can be connected to the mobile communication network 2. The communication terminal #4 is a communication terminal to be a communication counterpart for the communication terminals #1 to #3.

The mobile communication network 2 of the present invention is configured by the wireless access networks 5a to 5c, and the core network 3, etc. The wireless access networks 5a to 5c are access networks that provide a means for the communication terminals #1 to #3 to access the core network 3 through the wireless section 6 and, similarly to the conventional technique, are each configured by a wireless base station, a base station management system, etc. The core network 3 is a network and a controlling system that execute transmission of information, connection control, communication management, etc., between the communication terminals #1 to #3 and the communication terminal #4 that is a communication counterpart thereof, and includes the communication control device 4. The communication control device 4 includes a session controlling means 4a that executes connection control, session management, etc., between the communication terminals #1 to #3 and the communication terminal #4 that is the communication counterpart thereof; and a subscriber information management means 4b that manages location management information of the communication terminals #1 to #4 and subscriber information of users who use the communication terminals #1 to #4, etc.

Because a multimedia communication service controlling function is provided for the core network 3, the mobile communication network 2 of the present invention includes functions that are included in a multimedia communication controlling sub system in the conventional technique, as a part of the functions of the core network 3. More specifically, the functions such as the CSCF, HSS, etc., in the conventional technique are respectively included in the session controlling means 4a and the subscriber information management means 4b of the communication control device 4.

The communication terminal #1 is attached with the USIM card 8. The USIM card 8 stores a subscriber identifier and the subscriber information management means 4b of the communication control device 4 registers the subscriber identifier. The communication terminal #1 constitutes, together with the communication terminals #2 and #3, the PAN 7. The communication terminal #1 is connected to the wireless access network 5a through the wireless section 6 and further to the core network 3 thereafter, and has a connection path from the PAN 7 to the mobile communication network 2. Though the communication terminal #2 is not attached with the USIM card 8, the communication terminal #2 is a communication terminal that has an access path to the mobile communication network 2. The communication terminal #2 is registered in the subscriber information management means 4b correlated with the communication terminal #1 as a communication terminal constituting the same PAN 7 as that of the communication terminal #1. Though the communication terminal #3 is not attached with the USIM card 8 and has no connection path to the mobile communication network 2, similarly to the communication terminal #2, the communication terminal #3 is registered correlated with the communication terminal #1 as a communication terminal constituting the PAN 7. When the communication terminal #3 is connected to the mobile communication network 2, the communication terminal #3 is connected through the communication terminal #1 or the communication terminal #2 that each includes a connecting means.

The subscriber information management means 4b manages subscriber information that corresponds to each subscriber identifier. The subscriber information includes identification information of the communication terminals constituting the PAN 7, information to manage, control, and use the PAN 7, etc., as the profile information of the PAN 7.

The session controlling means 4a processes a session establishment request from a user (a communication terminal) to another user (another communication terminal), obtains subscriber information of the user that is connected to from the subscriber information management means 4b, identifies the communication terminal that is connected to, and controls connection of the session.

The session controlling means 4a judges whether processing by the application server 1 is necessary based on the subscriber information, the type, attribute, etc., of the requested session, obtains an instruction and information from the application server 1 when necessary, and executes control to connect a proper session, control of transfer of the session, etc. Similarly to the conventional technique, the application server 1 provides application services such as high-degree multimedia communication services, etc., on a session that is requested to be established and, when a complicated session control needs to be executed, supports the function to connect the session such as instruction and control to the session controlling means 4a. Description will be given below for an example of a method of managing as a group the communication terminals constituting the PAN in the above mobile communication network system.

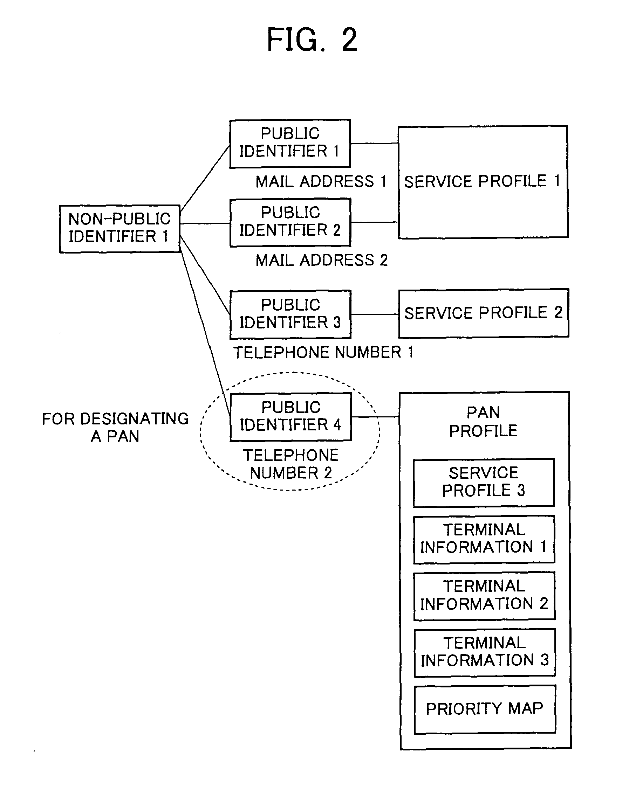

Fig. 2 is a diagram for explaining an exemplary configuration of the subscriber information including information to manage the PAN in the present invention. A public identifier for the PAN is added to the conventional subscriber information. The public identifier is managed in the PAN, being correlated with a non-public identifier of the communication terminal #1 that is attached with the USIM card. Four public identifiers are correlated with the non-public identifier 1 that is uniquely assigned to the USIM card of the communication terminal #1. Similarly to the conventional technique, when the communication terminal executes control of the communication such as a call connection or a session connection, each of these public identifiers is information such as a telephone number, an email address, a SIP-URI, that is, so-called a terminal address to distinguish and identify a communication terminal.

The reason why a plurality of public identifiers are assigned to one communication terminal is that the system of identification information/address, describing method, etc., are different. For example, a telephone number is used as the identification information in the telephone service, an email address is used for email, etc. In an example shown in Fig. 2, an email address 1 is assigned to the public identifier 1, an email address 2 is assigned to the public identifier 2, a telephone number 1 is assigned to the public identifier 3, and a telephone number 2 is assigned to the public identifier 4. The public identifiers 1 and 2 are correlated with the service profile 1, the public identifier 3 is correlated with the service profile 2, and the public identifier 4 is correlated with a PAN profile.

A plurality of public identifiers correlated with one service profile can be used as, for example, addresses with other names for one same service type (aliases). The public identifier 4 is a public identifier to designate the PAN, and designates collectively the group of the communication terminals #1, #2, and #3 constituting the PAN 7 and does not designate any of the communication terminals thereof. The PAN profile that is the information necessary for handling the PAN 7 is managed correlated with the public identifier 4 for the PAN.

In addition to the conventional service profile, the PAN profile manages a priority map that includes pieces of terminal information 1 to 3 of the communication terminals #1, #2, and #3, communication terminals that are each recommended depending on the contents and the type of a session, and relations such as the connection paths between the PAN 7 and the mobile communication network 2 or a connection path to be selected for a communication terminal used, with respective priority thereof. The subscriber information management means 4b installed in the home domain (a mobile communication network provided by a communication service provider that the user subscribes to) of the USIM card 8 attached to the communication terminal #1 manages these pieces of information.

The network configuration of the PAN 7, that is, the communication terminals constituting the PAN are not defined in advance and need to be considered that the terminals are dynamically changed depending on the state or actions of the user. Therefore, in order to flexibly cope with addition and deletion of the communication terminals constituting the PAN 7, the subscriber information management means 4b is configured to be able to dynamically change the public identifiers, the profile information, etc., for the PAN according to requests from the communication terminals, etc.

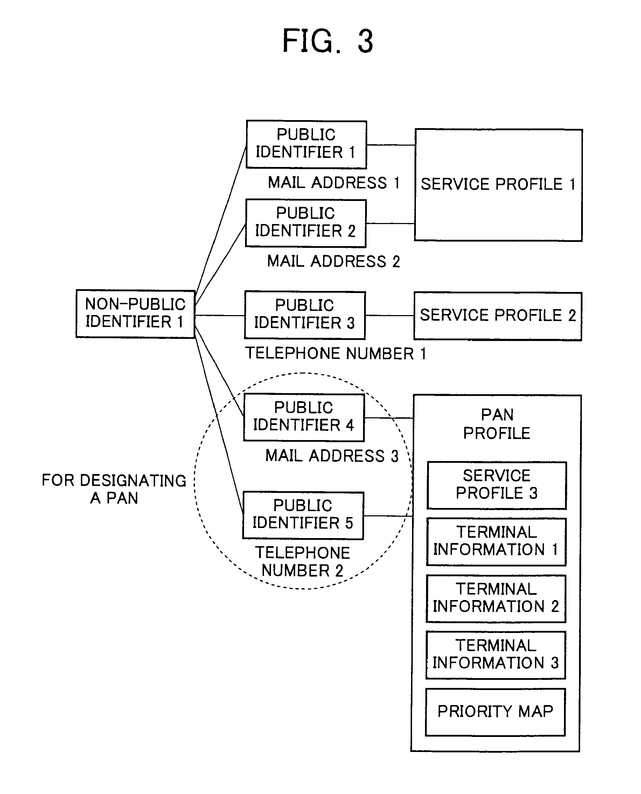

Similarly to the conventional public identifiers for a communication terminal, the public identifiers for the PAN need not to be limited to one for one PAN and a plurality of public identifiers may be provided for one PAN. An example for this case will be described below referring to Fig. 3.

Fig. 3 is a diagram for explaining another exemplary configuration of the subscriber information including the information to manage the PAN in the present invention. In this example, it is shown that the public identifiers 4 and 5 are correlated with one same PAN profile and that a plurality of public identifiers to designate a PAN, that is, so-called addresses with other names to one same service type (aliases) may be provided.

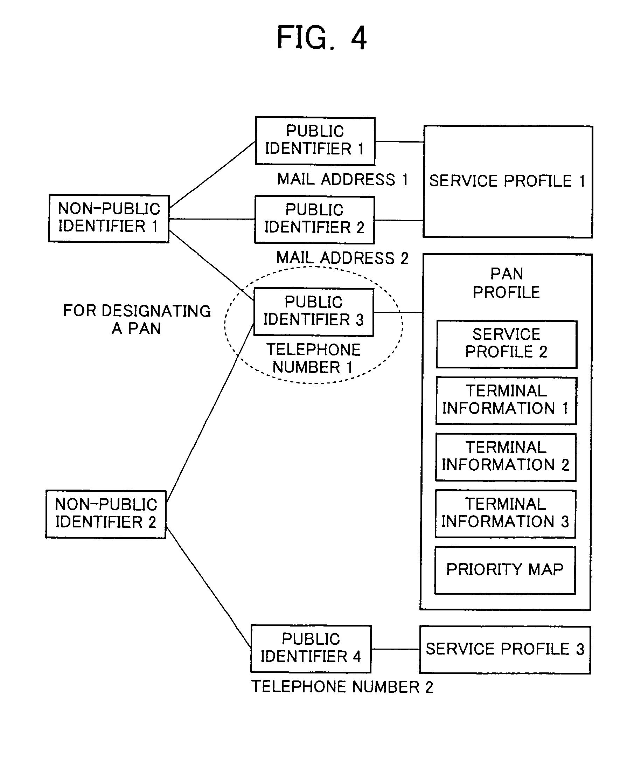

On the other hand, when a plurality of communication terminals each attached with the USIM card 8 are present in the PAN 7, one public identifier for the PAN is managed such that this public identifier is correlated with a plurality of non-public identifiers respectively corresponding to the plurality of communication terminals. Referring to Fig. 4, description will be given below for an example of this case.

Fig. 4 is a diagram for explaining yet another exemplary configuration of the subscriber information including information to manage the PAN in the present invention. For example, when the USIM card 8 is attached to the communication terminal #2 in addition to the communication terminal #1, the public identifier 3 to identify the PAN 7 is correlated with both of the non-public identifier 1 corresponding to the USIM card 8 attached to the communication terminal #1 and the non-public identifier 2 corresponding to the USIM card 8 attached to the communication terminal #2. By doing so, even when either the communication terminal #1 or #2 has left the PAN 7, the public identifier for the PAN can continuously be valid while the public identifier for the PAN remains being correlated with the remaining one communication terminal.

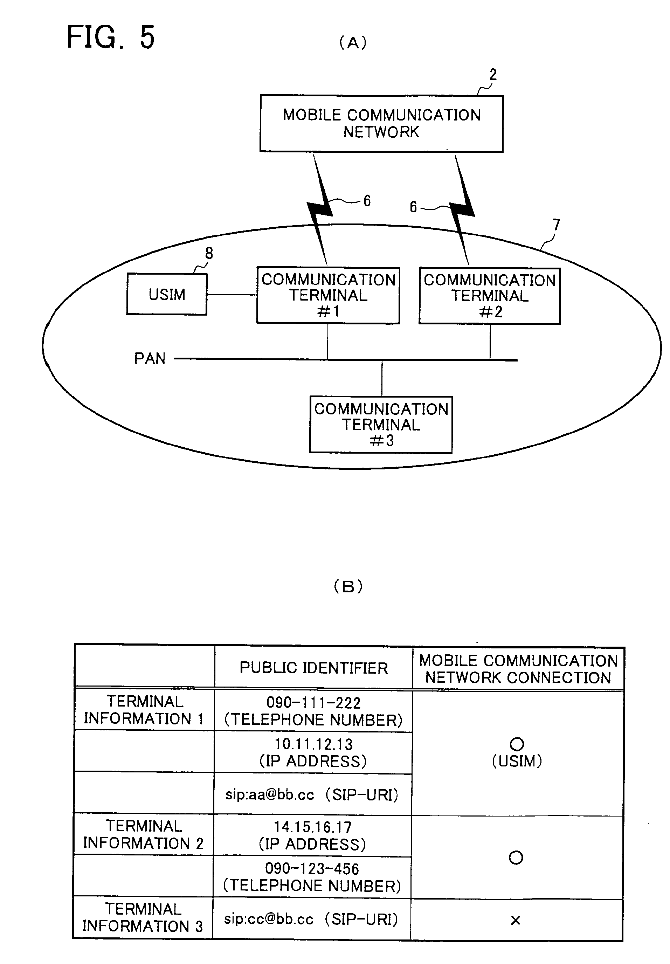

Fig. 5 is a diagram for explaining a detailed example of terminal information included in profile information of the PAN. In a mobile communication system shown in Fig. 5(A), identification information of each of the communication terminals #1, #2, and #3 included in the PAN 7, etc., are managed as terminal information. The terminal information includes a public identifier correlated with each of the communication terminals as identification information and connection information for connection between the communication terminals and the mobile communication network 2. Similarly to the public identifier for a communication terminal, this public identifier is address information used in communication control and is SIP-URI, a terminal IP address, a telephone number, etc.

The connection information for connection with the mobile communication network 2 indicates whether each of the communication terminals constituting the PAN 7 includes a connecting means for connection with the mobile communication network 2. In Fig. 5(B), a communication terminal including a connecting means for connection with the mobile communication network 2 is represented by "o" and a communication terminal not including any connecting means and needs another communication terminal in the PAN 7 to intervene and relay for the communication terminal to connect to and access the mobile communication network 2 is represented by "×". By referring to these pieces of information, the mobile communication network 2, more specifically, the communication control device 4, when the device 4 connects to and access a communication terminal in the PAN 7, can recognize and manage the communication terminals and the connection paths that can directly connect to the wireless access networks 5a to 5c and the communication terminals constituting the PAN 7.

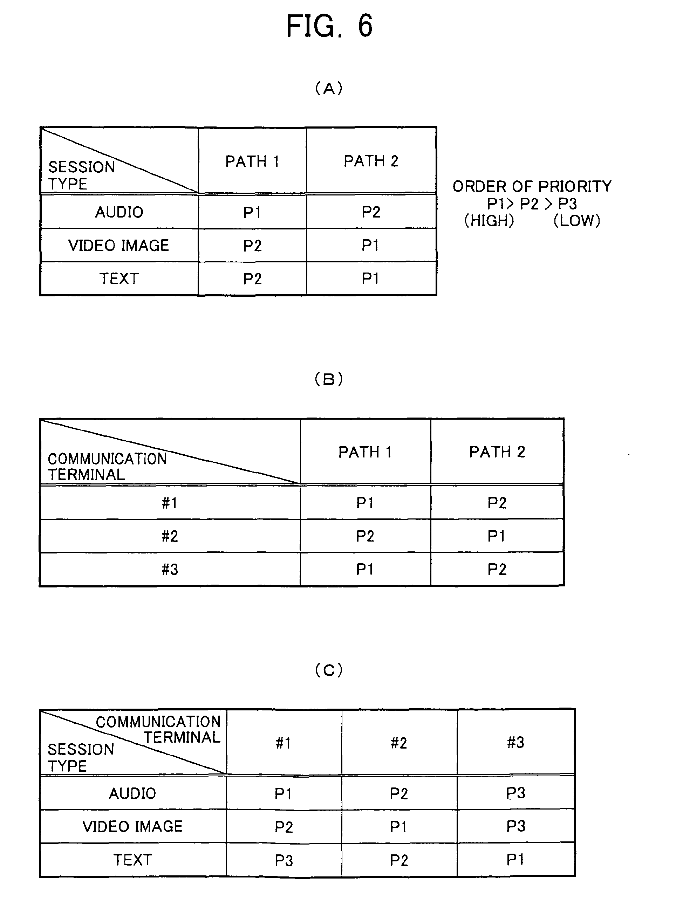

Fig. 6 is a diagram for explaining a detailed example of a priority map managed as the profile information of the PAN. The priority map is configured by, for example, three tables respectively shown in Figs. 6(A) to 6(C). Fig. 6(A) is a mapping showing priority for combinations of the connection paths to the mobile communication network and the session types. The pieces of priority are respectively denoted by P1, P2, and P3 in order of descending priority. Fig. 6(B) is a mapping of priority for each of combinations of communication terminals and connection paths to connect to the mobile communication network. Fig. 6(C) is a mapping of priority for each of combinations of the session types and communication terminals used for the sessions.

A connection path to connect to the mobile communication network 2 means a path that relays and passes through a communication terminal that includes the connecting means to connect to the mobile communication network 2 described in the above referring to Fig. 3 and connects to the mobile communication network 2. In Fig. 6, a path (wireless section) passing through the communication terminal #1 is referred to as "path 1" and a path (wireless section) passing through the communication terminal #2 is referred to as "path 2". In the mapping of the connection paths and the session types, priority of which path is to be used is shown depending on the type of a session (the category of medium, for example, audio, a video image, and a text) requested to connect to.

In the mapping of the communication terminals and the connection paths, priority representing the rank as to which path is proper to be used is shown depending on the communication terminal to be used based on the relation between the capacity, function, performance, etc., of the communication terminals and the speed and the quality of communication in each of the paths. In the mapping of the session types and the communication terminals, priority as to which communication terminal is recommended to be used is shown considering the capacity, functions, performance, etc., of the communication terminal, depending on the session type for which connection is requested (for example, difference in the medium to be used such as audio, a video image, and a text, or difference in the service to be used such as telephone, television telephone, e-mail).

By referring to these priority mappings, after considering further the policy, etc., of the communication service provider, when the application server 1 and the session controlling means 4a execute session connection to the communication terminal in the PAN 7, the server 1 and the means 4a select and determine a proper communication terminal and a proper path for the session and connects the session. Therefore, in the mobile communication network 2 of the present invention, a desirable communication speed and a desirable communication quality for the session can always be secured and the capacity and the features of the communication terminal can fully be utilized. Therefore, suitable services can be provided for a user.

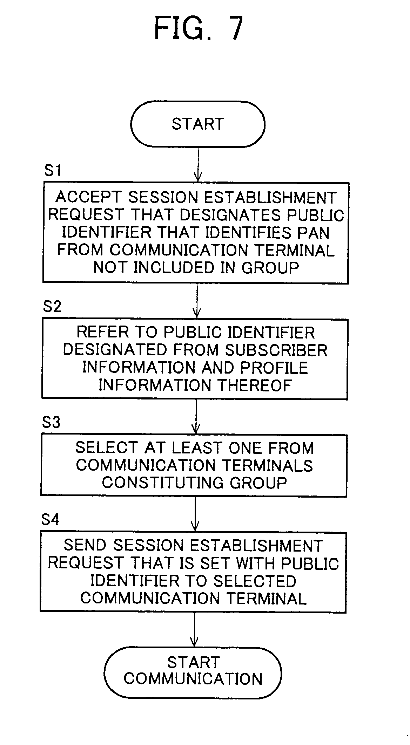

Fig. 7 is a flowchart for explaining an exemplary communication control method that is applicable with the present invention. Description will be given for an example for the case where establishment of a session is requested to the PAN of the present invention, referring to above Fig. 15. The user 107 designates a public identifier for the PAN that identifies the PAN 101 of the user 106 from the communication terminal 105 and requests session establishments. A communication control device (not shown) of the mobile communication network 100 receives and processes the request for the session establishment (step S1). Description will be given below for the communication control device of a mobile communication network 100 in this example as the communication control device 4 shown in Fig. 1.

A connection destination contained in the session establishment request is described as a public identifier for a PAN, and is not a specific communication terminal. Therefore, the communication control device 4 reads the profile information of the PAN that is correlated with the public identifier for the PAN and refers to a priority map therein (step S2). The communication control device 4 judges the type of the session for which the establishment is requested, and selects and determines a proper communication terminal and a proper connection path according to the priority map and, when necessary, the policy of the communication service provider (step S3). In Fig 15, an example is shown for the case where a communication terminal 102 is selected, and the communication control device 4 sends a session establishment request with a public identifier for the communication terminal 102 set therein (step S4), thereby, causes the request to arrive at the communication terminal 102, and starts communication.

Referring to the above Fig. 16, another example will be shown for the case where a session with a communication terminal in the PAN is established using the subscriber management of the present invention. Similarly to the above example, the user 107 designates the public identifier for the PAN that identifies the PAN 101 of the user 106 from the communication terminal 105 and requests the establishment of the session. To the session establishment request, the communication control device 4 reads the profile information of the PAN 101 correlated with the public identifier for the PAN and refers to the priority map therein.

In this case, assuming that the session for which establishment is requested is multimedia communication using simultaneously, for example, audio, a video image, and a text, the communication control device 4 judges that it is desirable to use separate communication terminals respectively for the media from the priority map, and selects and determines proper connection paths respectively for the communication terminals. This means to divide the session establishment request from the communication terminal 105 into a plurality of sessions respectively with a plurality of communication terminals. Therefore, the communication control device 4 sends session establishment requests respectively set with public identifiers respectively representing the communication terminals 102, 103, and 104 respectively to those communication terminals and, thereby, establishes sessions. This process is executed by the session controlling means 4a.

For example, for a multimedia communication session establishment request, this session is established being divided into three sessions such as, for example, the audio for the communication terminal 102, the video image for the communication terminal 103, and the text for the communication terminal 104 and communication formed by combining these three sessions is executed. Though an example of dividing one session establishment request into a plurality of requests has been shown, in contrast, a plurality of session establishment requests from a plurality of communication terminals in the PAN 101 can be integrated and caused to arrive at a communication terminal of the communication counterpart as one session establishment request.

As above, in the subscriber management of the present invention, in addition to the conventional subscriber information, public identifiers for a PAN and a PAN profile correlated with the identifiers are respectively managed, and the public identifiers for the PAN are managed correlated with non-public identifiers respectively of communication terminals each attached with a USIM card in the PAN. The PAN profile includes identification information such as the public identifiers as terminal information of the communication terminals constituting the PAN. Therefore, by tracing these correlations, a public identifier for the PAN that a communication terminal belongs to can be discriminated from the public identifier of the communication terminal constituting the PAN.

Even when the communication control device has received a session establishment request that designates a public identifier of any one of the communication terminals constituting the PAN, the same process as that of the example of the communication control method shown in the above Fig. 7 can be executed. Describing more specifically, when the communication control device 4 receives from the communication terminal 105 a session establishment request that designates a public identifier of any one of the communication terminals constituting the PAN, for example, the communication terminal #1 of Fig. 2, the communication control device 4 can refer to the subscriber information, read the public identifier for the PAN correlated with the communication terminal #1 and the profile information of the PAN correlated therewith, and execute the completely same processes as those in the example shown in Fig. 7 for steps S2 and after that. In the example shown in Fig. 2, because the public identifier for the PAN is correlated with the non-public identifier of the communication terminal #1, the communication control device 4 refers to the subscriber information, thereby, discriminates the non-public identifier with which the public identifier of the communication terminal #1 designated by the session establishment request is correlated, traces the correlation from the non-public identifier to the public identifier for the PAN and, thereby, refers to the public identifier for the PAN and the profile information of the PAN correlated therewith.

In the subscriber management of the present invention, as shown in Fig. 4, because the public identifier for the PAN is correlated with the non-public identifiers respectively of the communication terminals each attached with a USIM card in the PAN, even when a public identifier of any one of the communication terminals constituting the PAN is designated, the same process as that of the above case where a public identifier for the PAN is designated can easily be executed. However, communication terminals for which non-public identifiers and public identifiers are managed as the subscriber information are only the communication terminals that are each attached with a USIM card and, therefore, when the communication control device 4 receives a session establishment request that designates a public identifier of a communication terminal that is not attached with any USIM card, the communication control device 4 refers to the terminal information of the profile information of the PAN and searches for the public identifier and, thereby, can discriminate and refer to the public identifier of the PAN to which the communication terminal belongs and the profile information thereof.

As above, in the subscriber management of the present invention, the correspondence and the correlation between the public identifier for the PAN and the public identifiers of the communication terminals constituting the PAN and, in contrast, the correspondence and the correlation between the public identifiers of the communication terminals and the public identifier for the PAN to which the communication terminals belong can be easily managed, and referring and discriminating thereof can be easily executed.

As above, according to the present invention, in a mobile communication network, communication terminals and users can be managed not as the 1:1 correlation thereof but with a concept of a group as the communication terminals that a user owns. Therefore, a user can be identified with a subscriber identifier by a USIM card, however, a communication terminal attached with a USIM card and other communication terminals constituting a PAN can be managed correlating the communication terminal and the other communication terminals. Therefore, a plurality of communication terminals can be used with one USIM card.

Because a plurality of communication terminals constituting a PAN can manage collectively a plurality of paths that each are connected to a mobile communication network as a group of the PAN, communication using simultaneously a plurality of connection paths in parallel can be executed or communication that selectively uses one specific connection path can be executed.

By referring to the profile information of the PAN, a path suitable for the type and attributes of a session can be determined. One session can be divided into a plurality of sessions set on a plurality of paths, depending on the traffic amount necessary for a session, and the state and transmitting capacity of each path, and paths can be flexibly switched according to the communication state and the congestion state of the paths.

A communication terminal suitable for the type and the attributes of a session or a service can be selected and determined by referring to the profile information of the PAN. A user can establish a session at the optimal communication terminal depending on the type of the session or a service, by setting the priority of a communication terminal.

Because a path can be selected and determined corresponding to a communication terminal by referring to the profile information of a PAN, resources of the transmitting path, especially resources in a wireless section can be effectively utilized. In contrast, a communication terminal to be used can be selected and changed according to the traffic amount and the transmitting capacity of a path.

Because communication terminals can be managed, as communication terminals constituting a PAN, including communication terminals that are not attached with or can not be attached with any USIM card, communication and services utilizing the capacity of a communication terminal can be used.

From the viewpoint of a user who is a call origin, even in the case where the public identifier for the PAN of a connection counterpart user is not recognized or even in the case where whether the connection counterpart user (a communication terminal) constitutes a PAN is not recognized at the time the call is made, when a public identifier of any one of the communication terminals that the connection counterpart user owns is designated, the same effect as that obtained when session establishment is requested designating the public identifier for the PAN can be obtained and, therefore, services full of flexibility can be enjoyed.

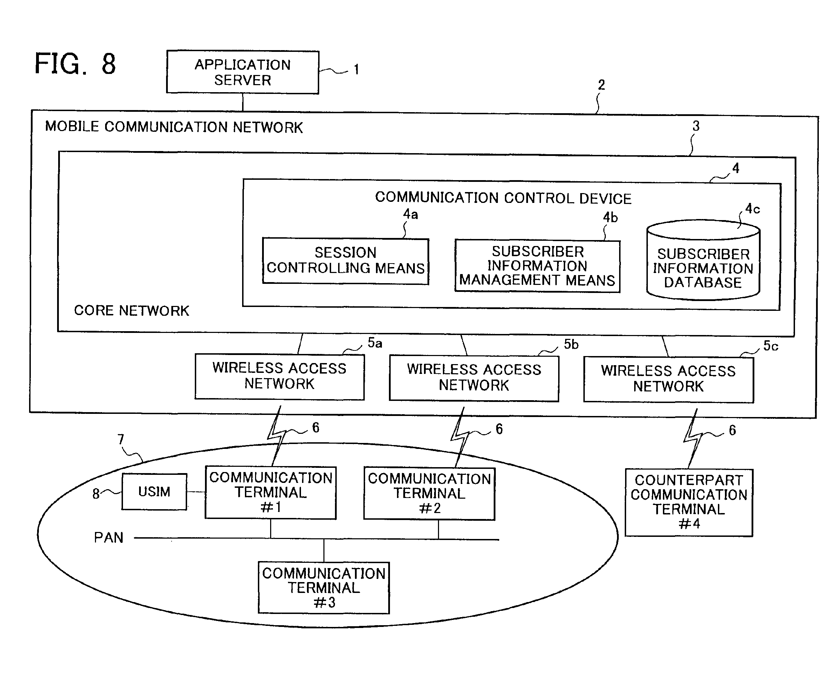

Fig. 8 is a schematic diagram of an exemplary configuration of a mobile communication network system that is another embodiment of the present invention. The system configuration shown in the present embodiment includes a subscriber information database 4c in addition to the configuration shown in Fig. 1. The parts that are given the same reference numerals as those in Fig. 1 respectively have the same functions and description thereof to be repeated is omitted.

The subscriber information management means 4b registers and manages the information of the PAN 7 that the communication terminals #1, #2, and #3 constitute, and identification information and attribute information of these communication terminals. The subscriber information management means 4b manages subscriber information corresponding to subscriber identifiers. Non-public identifiers, public identifiers, service profiles, etc., that are subscriber information of respective communication terminals and the correlation thereof are same as those of the conventional technique. In addition, the subscriber information management means 4b includes identification information of the communication terminals constituting the PAN 7 and information to manage, control, and use the PAN 7 as the public identifier for the PAN 7 and the profile information of the PAN 7 correlated therewith. The subscriber information database 4c connected to the subscriber information management means 4b stores and saves the subscriber information, the information on the PAN 7, etc., and accesses such as reading, rewriting, deleting, etc., can be made at any time from the subscriber information management means 4b.

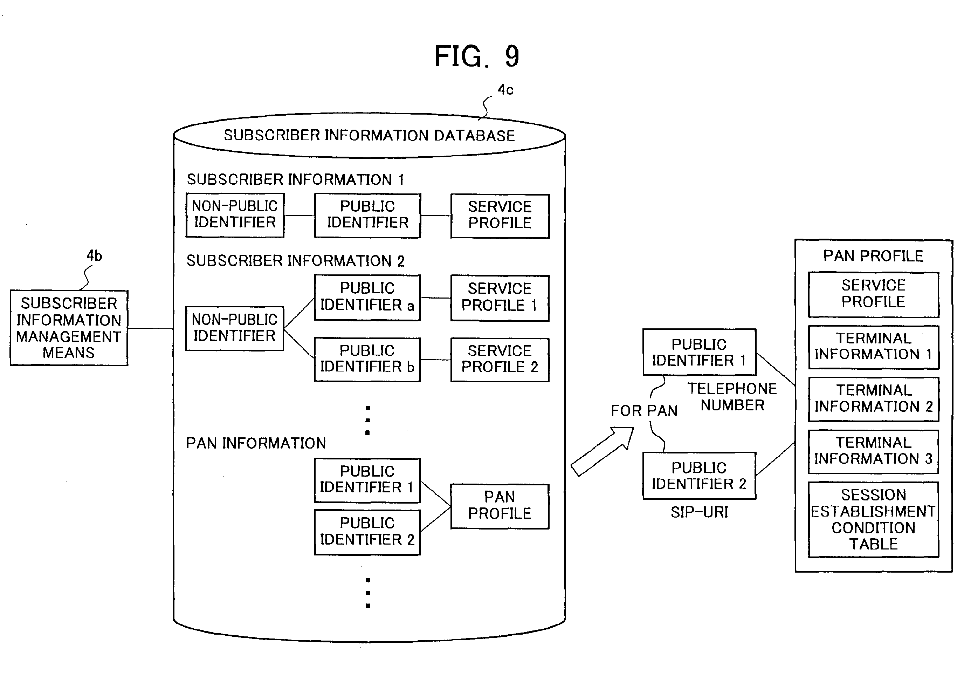

Referring to Fig. 9, description will be given for an exemplary schematic configuration of the subscriber information including information to manage the PAN of the present invention. The subscriber information database 4c stores and saves the subscriber information of each subscriber who subscribes to the mobile communication services. In the present invention, in addition to the conventional subscriber information, the database 4c stores and manages the public identifier for the PAN as information of the PAN 7. Similarly to the conventional technique, the public identifier is information such as a telephone number, an email address, a SIP-URL, that is, so-called a terminal address to distinguish and identify a communication terminal when the communication terminal controls communication such as a call connection, a session connection, etc. However, the public identifier for the PAN is used not to request a call connection or a session connection identifying one of the communication terminals constituting the PAN 7, but to designate the group of these communication terminals collectively.

In the example shown in Fig. 9, the two public identifiers 1 and 2 are managed as public identifiers for the PAN. The reason why these plurality of public identifiers are assigned to one same PAN 7 is that the system, describing method, etc., of identification information/address are different depending on the type and the attribute of services. For example, a telephone number is used as identification information in the telephone service, and an email address is used in the email system. In the example of Fig. 9, a telephone number is assigned to the public identifier 1 and a SIP-URL is assigned to the public identifier 2. These plurality of public identifiers can be used as, for example, addresses with other names (aliases) to the one same service type.

The PAN profile that is information necessary for managing the PAN 7 is managed correlated with a public identifier for the PAN. In addition to the same service profile as the conventional one that shows the attribute, the type, the conditions, etc., of services that can be used as the PAN 7, the PAN profile manages a session establishment condition table that lists pieces of terminal information 1 to 3 respectively of the communication terminals #1 to #3, the contents, the types of sessions that each of the communication terminals can process and use.

The public identifier for the PAN and the PAN profile correlated therewith are different from the subscriber information of the communication terminal attached with a USIM card and, therefore, do not themselves include the non-public identifier, that is, the unique identification information of the USIM card. In the subscriber information database 4c, these pieces of information of the PAN 7 can be managed being independent from the subscriber information of the USIM card and the communication terminal and can also be managed being correlated with the non-public identifier of one of the communication terminals constituting the PAN 7, for example, the communication terminal #1. In either case, even in the state where the PAN 7 is constituted, the public identifier and the service profile of the communication terminal #1 before constituting the PAN 7 are not influenced. Therefore, the PAN profile is referred to for a call connection request or a session connection request that designates the public identifier for the PAN, and the service profile of the communication terminal #1 is referred to for a connection request that designates the public identifier of the communication terminal #1.

These pieces of information are managed by the subscriber information management means 4b installed in a home domain (a mobile communication network provided by the communication service provider that the user subscribes to) of the USIM card 8 because the only communication terminal that is attached with the USIM card 8 in the PAN 7 is the communication terminal #1.

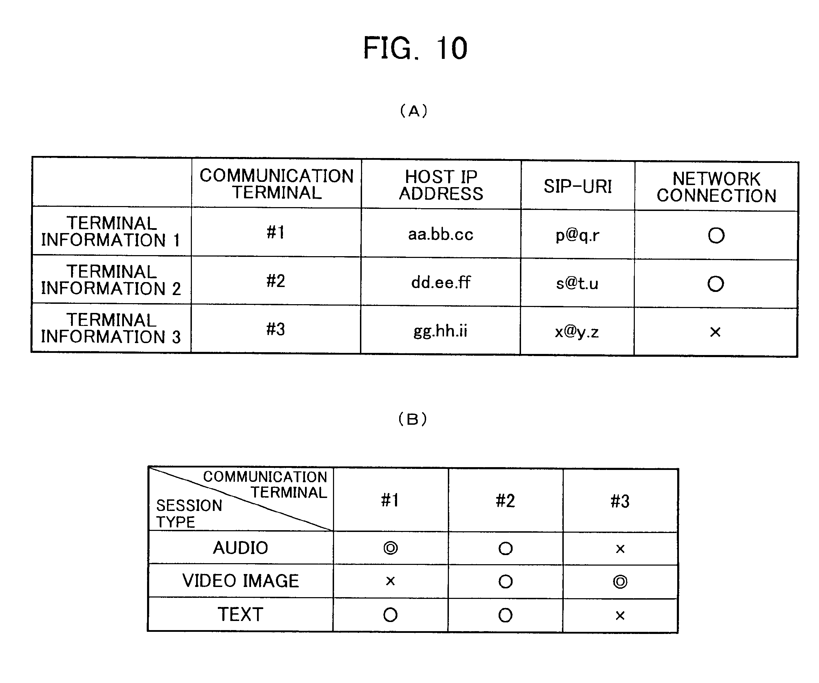

Fig. 10 is a diagram of an example of the contents of the PAN profile. Fig. 10(A) is a schematic diagram of the terminal information managed in the PAN profile. Terminal information of each of the communication terminals #1 to #3 constituting the PAN 7 is managed as the terminal information. The terminal information includes a host IP address, URI (Uniform Resource Identifier) that is the identification information of each communication terminal and is address information used when a call connection or a session connection is executed. The address information is a public identifier for each communication terminal. As above, because not all the communication terminal need to each have public identifiers corresponding to all types of sessions and attributes, the terminal information in the embodiment do not have to register both of the host IP address and the URI. The terminal information can include not only the address of each communication terminal but also information as to whether the communication terminal has a connecting means to the mobile communication network 2. This information is represented, for example, by "o" when the communication terminal has the connecting means to the mobile communication network 2 and by "×" when the communication terminal has no connecting means.

Fig. 10(B) is a diagram of an example of a session establishment condition table included in the PAN profile. For each communication terminal constituting the PAN 7, the session establishment condition table shown in Fig. 10 (B) lists the aptitude of each communication terminal for the type of session such as audio, a video image, a text, etc., based on the capacity, performance, attribute, etc., of each communication terminal. In the example shown in Fig. 10(B), it is assumed that the communication terminal #1 is a terminal that features an audio function thereof, the communication terminal #2 is a portable telephone having a television telephone function, etc., and the communication terminal #3 is a terminal that is dedicated to a displaying function of images. For example, for an audio session, the communication terminals #1 and #2 can communicate, process, and input/output (in the figure, represented by "o" or "@"), and the communication terminal #3 has no audio function (in the figure, represented by "×").

Similarly, the communication terminals that can cope with video image sessions are the communication terminals #2 and #3. For example, for a video image session, the table shows that the use of the communication terminal #3 is recommended better than the communication terminal #2 for the reasons such as that the communication terminal #3 has better capacities such as the codec, video image processing, the size and the resolution of the display (in the figure, represented by "@"). In this manner, the session controlling means 4a refers to the session establishment condition table that lists whether a communication terminal can process and communicate or which communication terminal is recommended for each of sessions that respectively are of different type and include different contents, etc. Thereby, such processes are enabled as assignment of a session that selects and connects to a communication terminal that is optimal for the session of the communication terminals constituting the PAN 7, and division of a session that divides one session including a plurality of types into a plurality of sessions that each connect to the optimal communication terminal for each type.

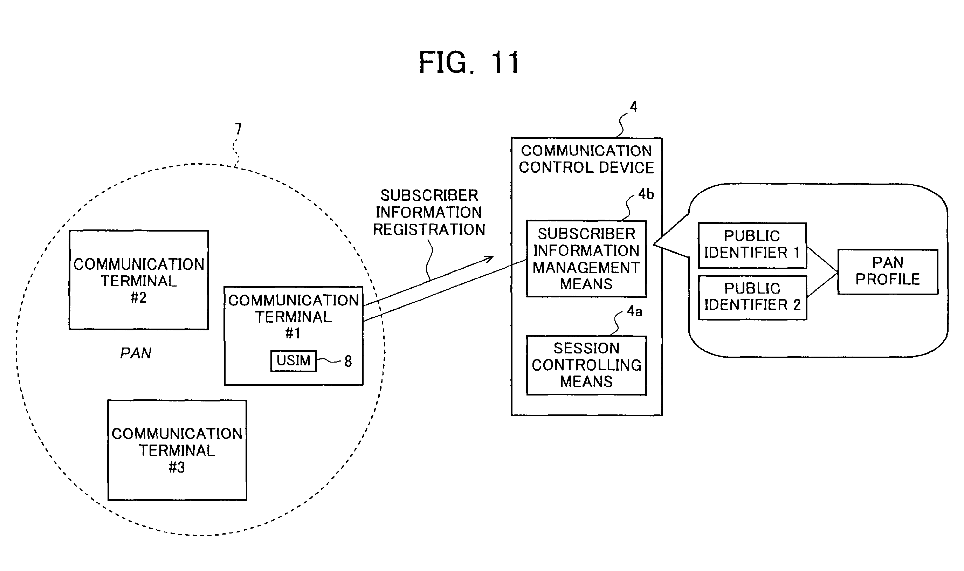

Fig. 11 is a diagram of an exemplary state where the PAN profile is registered in the mobile communication network. The registration of the subscriber information shown in Fig. 11 has been executed before the communication control device 4 of the mobile communication network 2 accepts and controls a call connection and a session connection to the PAN 7. Similarly to the above example, the PAN 7 is constituted by the communication terminals #1, #2, and #3, and the communication terminal #1 is attached with the USIM card 8 and can connect to and access the mobile communication network 2. The communication terminal #1 notifies the communication control device 4 of information necessary to register the PAN profile such as the terminal information of the communication terminals #2 and #3 and the session establishment condition table.

When the subscriber information management means 4b of the communication control device 4 receives these pieces of information, the means 4b correlates the received information with the public identifier for the PAN and creates, registers and stores the PAN profile. The identifier for the PAN may be notified of and registered from the communication terminal #1 together with the above information when the PAN 7 is constituted, or may in advance be registered and managed. The network configuration of the PAN 7, that is, the communication terminals constituting the PAN 7, is not defined in advance and needs to be considered to dynamically change depending on the state and actions of users. Therefore, to flexibly cope with addition, deletion, etc., of the communication terminals constituting the PAN 7, the system is configured to be able to dynamically change the public identifier for the PAN, the profile information, etc., by notifying and requesting the communication control device 4 from the communication terminal, etc.

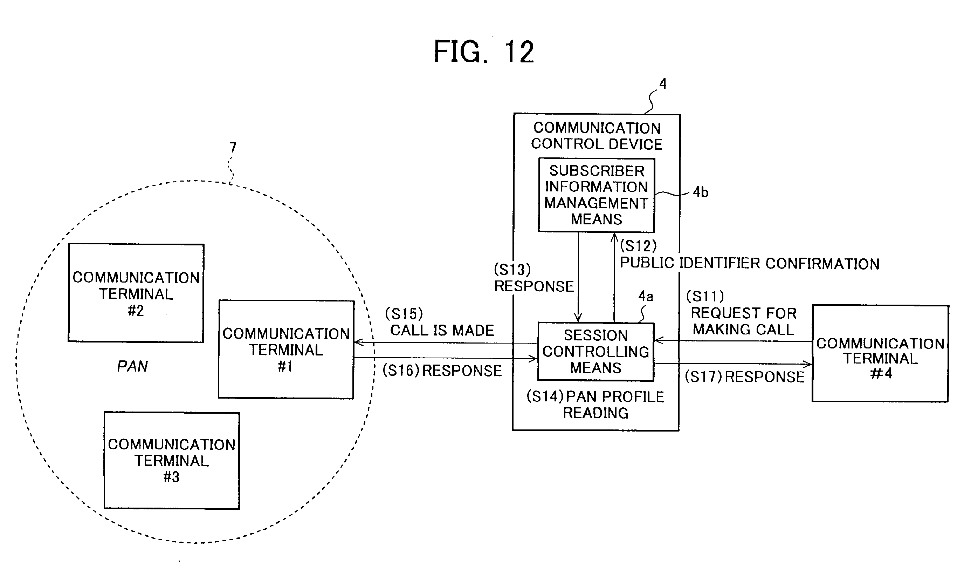

Fig. 12 is a diagram of an exemplary state where a session connection is executed with a communication terminal constituting the PAN. In this example, an example is shown of the case where, for a session connection request that designates the public identifier for the PAN, depending on the session type that is requested, the session controlling means 4a selects a suitable communication terminal in the PAN 7 and executes the session connection with selected communication terminal. In the example, the communication terminals #1, #2, and #3 constitute the PAN 7.

When the communication terminal #4 that is the call origin designates the public identifier for the PAN that is the call receiving side and sends a session connection request to the session controlling means 4a (S11), the session controlling means 4a receives the session connection request from the communication terminal #4, refers to the public identifier for the PAN that is registered in the subscriber information management means 4b, confirms that the public identifier indicated by the session connection request is valid, and accepts the session connection request (S12). When the session controlling means 4a receives the information of the PAN profile that is correlated with the public identifier for the PAN from the subscriber information management means 4b (S13), the means 4a reads the PAN profile and refers to the service profile and the session establishment condition table included in the PAN profile (S14).

In the example, description will be given for the operations thereafter assuming that the contents of the session establishment condition table is same as that shown in Fig. 10(B). The session controlling means 4a refers to the type (the type such as audio, a video image, and a text, or a plurality of combinations, etc., of those types) of the session connection request from the communication terminal #4, confirms that the requested session can be used by checking with the attribute, type, conditions, etc., of the service indicated by the service profile, and determines the type, attribute, etc., of the session adding and taking into account the attribute, conditions, etc., designated as the default.

By comparing the type, attribute, etc., of the session with the contents of the session establishment condition table, the session controlling means 4a executes control of connecting the requested session. When the session connection request is for an audio session, the session controlling means 4a selects the communication terminal #1 as the connection destination because the session establishment condition table shows that the communication terminal #1 is recommended for an audio session (in Fig. 10(B), marked with "@"). When the session controlling means 4a further refers to the terminal information included in the PAN profile and reads the public identifier that is the address information of the selected communication terminal #1, the means 4a sends the session connection request that identifies the communication terminal #1 by designating the public identifier (S15). When the communication terminal #1 responds to the session connection request (S16), the session controlling means 4a notifies the communication terminal #4 of the response from the communication terminal #1 and an audio session is connected between the communication terminals #4 and #1 (S17).

In the above description, the example has been shown of the case where one of the communication terminals in the PAN 7 is selected and identified and a session is connected. However, for example, when no response is received from the communication terminal #1 (for example, the user does not operate to response) or a response of rejection of the connection is received though the session controlling means 4a has selected the communication terminal #1 as the connection destination of the audio session and has tried to connect the session, the means 4a can select as a second connection destination the communication terminal #2 that has an ability to process audio sessions that is not the optimal, and can connect the session with the communication terminal #2.

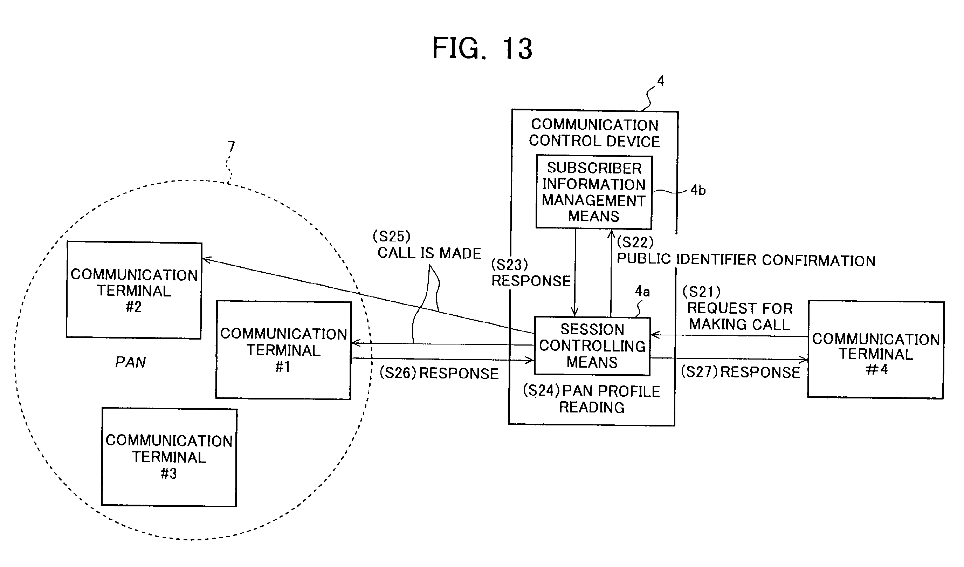

Fig. 13 is a diagram of another exemplary state where a session connection is executed with the communication terminal constituting the PAN. In the example, an example is shown of the case where, for a session connection request that designates the public identifier for the PAN, the session controlling means 4a simultaneously sends session connection requests to one or more communication terminal(s) that each can process a session of type requested of the communication terminals constituting the PAN 7, and establishes connection (s) with proper communication terminal (s) in the PAN 7 that has (have) responded to the session connection request (s). In the example, the communication terminals #1, #2, and #3 constitute the PAN 7.

When the communication terminal #4 that is the call origin designates the public identifier for the PAN that is the call receiving side and sends a session connection request to the session controlling means 4a (S21), the session controlling means 4a receives the session connection request, refers to the public identifier for the PAN registered in the subscriber information management means 4b, confirms that the public identifier indicated by the session connection request is valid, and accepts the session connection request (S22). When the session controlling means 4a receives the information of the PAN profile that is correlated with the public identifier for the PAN from the subscriber information management means 4b (S23), the means 4a reads the PAN profile and refers to the service profile and the session establishment condition table included in the PAN profile (S24).

In the example, description will be given for the operations thereafter assuming that the contents of the session establishment condition table is same as that shown in Fig. 10(B). The session controlling means 4a refers to the type (the type such as audio, a video image, and a text, or a plurality of combinations, etc., of those types) of the session connection request from the communication terminal #4, confirms that the requested session can be used by checking with the attribute, type, conditions, etc., of the service indicated by the service profile, and determines the type, attribute, etc., of the session adding and taking into account the attribute, conditions, etc., designated as the default.

By comparing the type, attribute, etc., of the session with the contents of the session establishment condition table, the session controlling means 4a executes control of connecting the requested session. When the session connection request is for an audio session, the session controlling means 4a selects both of the communication terminals #1 and #2 because the session establishment condition table shows that the communication terminals #1 and #2 can process and communicate for an audio session (in Fig. 10(B), marked respectively with "@" and "o"). When the session controlling means 4a further refers to the terminal information included in the PAN profile and reads the public identifier that is the address information of the selected communication terminals #1 and #2, the means 4a sends simultaneously the session connection requests that identifies those communication terminals #1 and #2 respectively to both of the communication terminals #1 and #2 by designating the public identifier (S25).

When the communication terminal #1 responds to the session connection request (S26), the session controlling means 4a notifies the communication terminal #4 of the response from the communication terminal #1 and a session is connected between the communication terminal #4 and the communication terminal #1 that has responded (S27). In this case, the session controlling means 4a controls to secure the connection of only one session by controlling such that, when the session controlling means 4a accepts the response from the communication terminal #1 at the above S26, the session controlling means 4a cancels the session connection request to the communication terminal #2 and, even when the communication terminal #2 responds later, controls not to connect any session with the communication terminal #2.

As above, because according to the example, a communication terminal that responds to a call connection request or a session connection request is selected not by the communication control device but by a user, the intention and the state of the user can be accurately reflected.

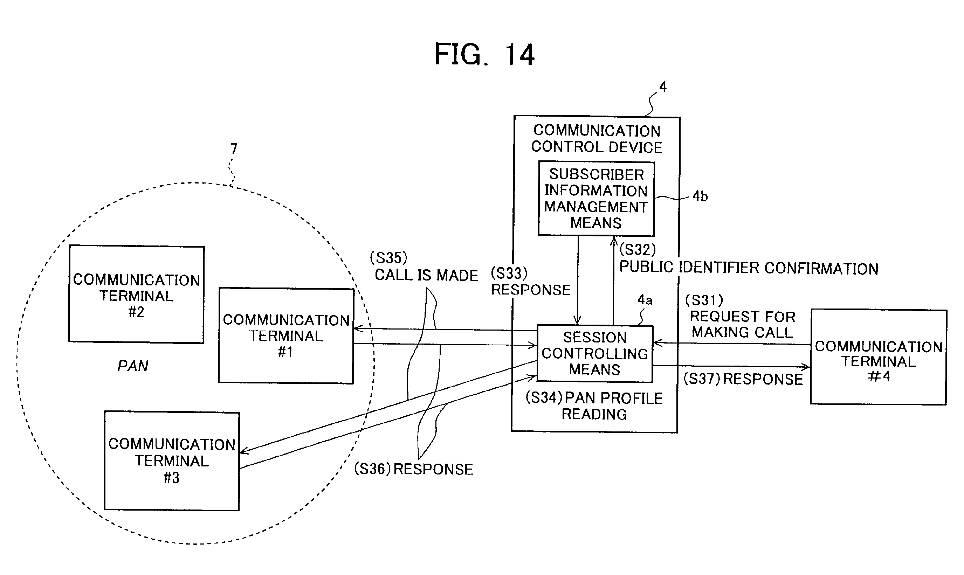

According to the configuration of the present invention, it can be easily realized that, in the case such as where the type of a session designated in a session connection request is, for example, a television telephone session that is a combination of audio and a video image for a session connection request to the PAN 7, the session controlling means 4a selects communication terminals respectively suitable for the types, for example, selects the communication terminals #1 and #2 respectively for an audio session and a video image session, and connects these plurality of communication terminals and the sessions and, thereby, controls such that the requested types of sessions are matched by a combination of the plurality of communication terminals, inversely, the session is divided. An example in this case will be shown in the following Fig. 14.

Fig. 14 is a diagram of yet another exemplary state where a session connection is executed with the communication terminal constituting the PAN. In the example, the communication terminals #1, #2, and #3 constitute the PAN 7. When the communication terminal #4 that is the call origin designates the public identifier for the PAN and sends a session connection request to the session controlling means 4a (S31), the session controlling means 4a receives the session connection request, refers to the public identifier for the PAN that is registered in the subscriber information management means 4b, confirms that the public identifier indicated by the session connection request is valid, and accepts the session connection request (S32). When the session controlling means 4a receives the information of the PAN profile that is correlated with the public identifier for the PAN from the subscriber information management means 4b (S33), the means 4a reads the PAN profile and refers to the service profile and the session establishment condition table included in the PAN profile (S34).

In the example, description will be given for the operations thereafter assuming that the contents of the session establishment condition table is same as that shown in Fig. 10(B). The session controlling means 4a refers to the type of the session connection request from the counterpart communication terminal #4, confirms that the requested session can be used by checking with the attribute, type, conditions, etc., of the service indicated by the service profile, and determines the type, attribute, etc., of the session adding and taking into account the attribute, conditions, etc., designated as the default. Especially in the example, to connect a session formed by combining a plurality of communication terminals or divide this session, the contents of the service profile also shows the attribute, the type, the conditions, etc., of the services that can be used and provided by a proper combination of the communication terminals constituting the PAN 7. That is, the contents do not show a simple set and a total of the service profile for a single communication terminal but shows a complex of these items.

For example, when a communication terminal that supports only audio sessions and has only the service profile of audio services and a communication terminal that supports only video image sessions and has only the service profile of video image services constitute the PAN 7, the case can be considered where the service profile of the PAN 7 includes a television telephone service, etc. By comparing the type, attribute, etc., of the session with the contents of the session establishment condition table, the session controlling means 4a executes control of connecting the requested session. When the type of the requested session is, for example, the television telephone and is a combination of an audio session and a video image session, the session controlling means 4a respectively selects the communication terminal #1 as the connection destination for the audio and the communication terminal #3 as the connection destination for the video image because the session establishment condition table shows that the communication terminal #1 is recommended for an audio session and the communication terminal #3 is recommended for an video image session (in Fig. 10(B), respectively marked with

When the session controlling means 4a further refers to the terminal information included in the PAN profile and reads the public identifier that is the address information of the selected communication terminals #1 and #3, the means 4a sends the session connection requests that respectively identify the communication terminals #1 and #3 by designating the public identifier (S35). When the communication terminals #1 and #3 respectively respond to the session connection requests (S36), the session controlling means 4a notifies the communication terminal #4 of the responses from the communication terminals #1 and #3, and connects an audio session between the communication terminals #4 and #1 and a video image session between the communication terminals #4 and #3 (S37).

An example where a plurality of communication terminals are selected and sessions constituted by respective types are respectively connected to the communication terminals has been described in the example and, for example, when a response is received only from either of the communication terminals (for example, the user does not operate to response) though the session controlling means 4a has selected the communication terminals #1 and #3 respectively as the connection destinations of the audio session and the video image session and has sent session connection requests, the means 4a can control to change such that both of the audio session and the video image session are connected to the communication terminal that has responded, by sending again the session connection request of the type that has no response by designating the public identifier of the communication terminal that has responded to the session connection request.

In this case, the session controlling means 4a may connect a plurality of sessions by dividing the session into an audio session and a video image session with the communication terminal that has responded, or may control such that the type to which one of the communication terminals has first responded is changed to a combination of the audio and the video image. When none of the communication terminals #1 and #3 has responded to the session connection request, the session controlling means 4a may select the communication terminal #2 as the second session connection destination and send the session connection request to the communication terminal #2.

As to which method of the methods respectively shown in the above three examples is used for a session connection request, the preference of users and the methods to be recommended may be registered in the subscriber information management means 4b and the session controlling means 4a as the information included in the PAN profile, or, when the session controlling means 4a processes a session connection request that designates the public identifier for the PAN, any one method may be selected depending on the type of the requested session, the terminal information included in the PAN profile, and the attribute and the type of each communication terminal in the PAN 7 shown in the session establishment condition table, and considering provision of services having sufficient quality, performance, and functions or provision of efficient services.

Description has been given in the above example for the case where the communication terminal that is the call origin executes a call connection request and a session connection request designating the public identifier for the PAN. However, even when the session controlling means 4a receives a session connection request that designates the public identifier of any one of the communication terminals that constitute the PAN, the same processing as above may be executed. Description will be given for such a case. In the case where the session controlling means 4a receives a session connection request that designates the public identifier of any one of the communication terminals that constitute the PAN, for example, the communication terminal #1, when the profile information of the PAN constituted of the plurality of communication terminals including the communication terminal #1 has been created, registered, and stored in the subscriber information management means 4b at this time, the session controlling means 4a can discriminate the public identifier for the PAN with which the public identifier of the communication terminal #1 is correlated and, obtain the subscriber information including the PAN profile that is correlated with the public identifier for the PAN by the subscriber information management means 4b similarly to the case where the public identifier for the PAN is designated, and establish the session referring to the PAN profile.

Thereby, when the user (communication terminal) that is the call origin recognizes the public identifier of the communication terminal #1 of the connection counterpart user but does not recognize the public identifier for the PAN, or when the user (communication terminal) recognizes the public identifier for the PAN but does not know at the time of making the call whether the connection counterpart user constitutes the PAN, by designating the public identifier of any one of the communication terminals that the connection counterpart user owns such as the communication terminal #1, the communication control device 4 can judge that the designated communication terminal constitutes the PAN, and establish the session with the group of the communication terminals constituting the PAN. Therefore, the same effect can be obtained as that of the above three examples such as the selection of the suitable communication terminal, and the division of a session into sessions with a plurality of communication terminals.

Describing more specific operations, as above, the subscriber information managed by the subscriber information management means 4b includes the public identifier for the PAN and the PAN profile correlated therewith in addition to the public identifier and the service profile of a communication terminal attached with a USIM card that each subscriber owns. The PAN profile includes the public identifier as the terminal information of each communication terminal that constitutes the PAN. When the session controlling means 4a receives a session connection request that designates the public identifier of, for example, the communication terminal #1, the means 4a refers to the public identifiers registered and managed in the subscriber information management means 4b, confirms that the public identifier of the communication terminal #1 is valid, and searches the public identifier of the communication terminal #1 from the terminal information of the registered PAN profile. When the public identifier of the communication terminal #1 is present in the terminal information in any PAN profile, the subscriber information management means 4b notifies the session controlling means 4a of the public identifier for the PAN with which the PAN profile is correlated and, thereby, the session controlling means 4a discriminates the public identifier for the PAN with which the communication terminal #1 is correlated, that is, the public identifier of the PAN to which the communication terminal #1 belongs.

The processes thereafter are completely same as those executed after the session connection request that designates the public identifier for the PAN has been received in Figs. 12, 13, and 14. However, when the session controlling means 4a refers to the session establishment condition table and selects one or more of the communication terminal(s) constituting the PAN, a process can be executed that takes into consideration that the communication terminal that is the call origin has designated the communication terminal #1 in the session connection request such as the raising up of the priority for the communication terminal #1 to be selected.

In the above example, to simplify the process of searching the public identifier of the communication terminal #1 from the terminal information of all the PAN profiles registered in the subscriber information management means 4b, inverse reference information (cross reference) from the subscriber information of a communication terminal to the public identifier for the PAN can be provided. Such inverse reference information can be easily managed in a manner that the inverse reference information is simultaneously registered or deleted when the communication terminal is registered or deleted in/from the terminal information of the PAN profile. In this case, when the session controlling means 4a receives a call connection request or a session connection request that designates the communication terminal #1, the means 4a refers to the subscriber information of the communication terminal #1 of the subscriber information management means 4b and, thereby, can read the public identifier for the PAN with which the communication terminal #1 is correlated.

As above, according to the present invention, in a mobile communication network, a user conventionally is identified by a subscriber identifier by a USIM card and only communication control such as a call connection and a session connection using a public identifier corresponding to the subscriber identifier is executed, whereas, a communication terminal and a user can be managed not in a 1:1 correlation of the communication terminal and the user but with a concept of a group as communication terminals that user owns and a public identifier is assigned to the group of communication terminals and, therefore, the user who is the call origin can designate not a specific communication terminal of the counterpart but the communication terminals that the user owns, indirectly, the counterpart user desired to communicate with and can request a call connection or a session connection. Therefore, communication in a form of user to user can be controlled, and flexibility, improvement of convenience, and higher functionality of communication services can be realized for both of the users who are the call origin and the call destination.

Because communication can be controlled including communication terminals that each are attached with no USIM card or can not be attached with any USIM card as the communication terminals constituting the PAN, use of communication and services that utilize the capacity of the communication terminals is enabled and, therefore, convenience and flexibility can be improved.

Because a proper communication terminal in the PAN can be automatically selected as a call destination of a call connection or a session connection, the user or the communication terminal that is the call origin does not need to respectively grasp all the public identifiers of the plurality of communication terminals that the user on the destination side owns, that is, does not need to know in advance the communication terminals that the communication counterpart owns and only needs to know the public identifier for the PAN. Therefore, convenience for the user can be improved and the method of using the communication services and the operations of the communication terminals can also be simplified.

Because a communication terminal suitable for the type and attribute of a session or a service can be selected and determined by referring to the profile information of the PAN, the session can be connected and used at the optimal communication terminal depending on the type of the session or the service.

For one session or one service, a plurality of communication terminals can be connected and used in a combination corresponding to the type, attribute, necessary capacity, etc. Therefore, improvement of the quality and performance and higher functionality of the services that a user can enjoy can be realized.

Even when no high-performance communication terminal of a multi-functional type that can process sessions and services respectively of various types and attributes is provided, high-degree communication services can be flexibly used. This leads to expansion of variation of communication terminals such as provision of communication terminals each being dedicated to a specific function and facilitated for higher performance thereof, and leads to expansion of services.

The communication control device executes control of selecting and connecting a proper communication terminal by referring to the profile information of the PAN and, thereby, can execute control that takes into account effective and efficient use of the resources on transmission paths, especially, the resource in the wireless sections.

Control can be executed such that the communication terminal to be used is selected and changed according to the use state of the resources on the transmission paths and the network such as the traffic amount and the transmission capacity.

From the user's viewpoint, by registering from a communication terminal the profile information of the PAN, especially, the information of the session establishment conditions, the user's intention, desire, preference, etc., can be reflected on the selection of a communication terminal.

The above effects of the present invention are especially remarkable in the example where the plurality of communication terminals constituting the PAN are simultaneously requested call connections or session connections and the communication terminals that have responded are selected and, because selection of the communication terminals can be executed reflecting thereon the user's state and preference, the use state of the communication terminal, the communication counterpart (the user or the communication terminal that is the call origin), etc., flexible communication services with high degree of freedom that match the user's desire can be provided.

From the viewpoint of the user who is the call origin, when the user does not recognize the public identifier for the PAN of the connection counterpart user or when the user does not recognize at the time of making the call whether the connection counterpart user (communication terminal) constitutes the PAN, the same effect can be obtained as that obtained when a session connection request is executed designating the public identifier for the PAN by designating the public identifier of any one of the communication terminals that the connection counterpart user owns. Therefore, services full of flexibility can be enjoyed.

## Claims

1. A mobile communication network subscriber information management system, comprising:
a means of managing, in addition to public identification information that designates a communication terminal to execute a call connection or a session connection with the communication terminal connected with the mobile communication network, at least one piece of public identification information for the communication terminal to identify a group that the communication terminal constitutes together with other communication terminals, in association with the communication terminal.

2. The mobile communication network subscriber information management system as defined in claim 1, wherein
the other communication terminals that constitute the group together with the communication terminal are communication terminals that constitute a network by being connected with the communication terminal and wherein
one or more pieces of public identification information for the group are public identification information that identify the network.

3. The mobile communication network subscriber information management system as defined in claim 1 or 2, wherein
profile information that includes the configuration of the group or the network and attributes of services that can be used by the group or the network is managed, being correlated with the public identification information to identify the group or the network.

4. The mobile communication network subscriber information management system as defined in claim 3, wherein
the profile information includes at least public identification information comprising address information that is used when a connection is requested to each of the communication terminals constituting the group or the network.

5. The mobile communication network subscriber information management system as defined in claim 4, wherein
the profile information includes at least information that indicates whether each of the communication terminals constituting the group or the network has a means of connecting to the mobile communication network.

6. The mobile communication network subscriber information management system as defined in claim 4, wherein
the profile information includes information that indicates priority given when one of connection paths to the mobile communication network is selected to communicate for each of the communication terminals constituting the group or the network.

7. The mobile communication network subscriber information management system as defined in claim 4, wherein
the profile information includes information that indicates priority depending on the contents and the type of communication given when each of the communication terminals constituting the group or the network selects one of the connection paths to the mobile communication network to communicate.

8. The mobile communication network subscriber information management system as defined in claim 4, wherein
the profile information includes information that indicates priority representing which communication terminal should be used to communicate depending on the contents and the type of the communication when the communication terminal constituting the group or the network communicates.

9. The mobile communication network subscriber information management system as defined in claim 1 or 2, wherein
when a group or a network that the communication terminal constitutes together with the other communication terminals includes a first communication terminal having a means to connect to the mobile communication network, the system manages one or more pieces of public identification information to identify the group or the network correlating the one or more pieces of public identification information with both of the communication terminal and the first communication terminal.

10. A mobile communication network subscriber information management method, comprising the step of:
managing, in addition to public identification information that designates a communication terminal to execute a call connection or a session connection with the communication terminal connected with the mobile communication network, at least one piece of public identification information for the communication terminal to identify a group that the communication terminal constitutes together with other communication terminals, in association with the communication terminal.

11. The mobile communication network subscriber information management method as defined in claim 10, wherein
the other communication terminals that constitute the group together with the communication terminal are communication terminals that constitute a network by being connected with the communication terminal and wherein
one or more pieces of public identification information for the group are public identification information that identify the network.

12. The mobile communication network subscriber information management method as defined in claim 10 or 11, wherein
profile information is managed that includes the configuration of the group or the network and attributes of services that can be used by the group or the network, being correlated with the public identification information to identify the group or the network.

13. The mobile communication network subscriber information management method as defined in claim 12, wherein
the profile information includes at least public identification information comprising address information that is used when a connection is requested to each of the communication terminals constituting the group or the network.

14. The mobile communication network subscriber information management method as defined in claim 13, wherein
the profile information includes at least information that indicates whether each of the communication terminals constituting the group or the network has a means of connecting to the mobile communication network.

15. The mobile communication network subscriber information management method as defined in claim 13, wherein
the profile information includes information that indicates priority given when one of connection paths to the mobile communication network is selected to communicate for each of the communication terminals constituting the group or the network.

16. The mobile communication network subscriber information management method as defined in claim 13, wherein
the profile information includes information that indicates priority depending on the contents and the type of communication given when each of the communication terminals constituting the group or the network selects one of the connection paths to the mobile communication network to communicate.

17. The mobile communication network subscriber information management method as defined in claim 13, wherein
the profile information includes information that indicates priority representing which communication terminal should be used to communicate depending on the contents and the type of the communication when the communication terminal constituting the group or the network communicates.

18. The mobile communication network subscriber information management method as defined in claim 10 or 11, wherein
when a group or a network that the communication terminal constitutes together with the other communication terminals includes a first communication terminal having a means to connect to the mobile communication network, one or more pieces of public identification information to identify the group or the network is managed being correlated with both of the communication terminal and the first communication terminal.

19. A communication control device comprising:
a session controlling means that manages/controls a call connection or a session connection between communication terminals; and
a subscriber information management means that manages subscriber information of a mobile communication network, wherein
the subscriber information management means manages at least one piece of public identification information to identify a group that a communication terminal connectable to the mobile communication network constitutes to be able to network-connect to other communication terminals, correlating the public identification information with the communication terminal and wherein
when a call connection request or a session establishment request is executed from a first communication terminal not included in the group or the network designating public identification information that identifies the group or the network, the session controlling means accepts the call connection request or the session establishment request, refers to the public identification information designated from the subscriber information and information correlated with the public identification information managed by the subscriber information management means, selects at least one of communication terminals constituting the group or the network, and executes a call connection or a session connection between the selected communication terminal and the first communication terminal using public identification information of the selected communication terminal.

20. The communication control device as defined in claim 19, wherein
the device refers to priority information of a connection path and a communication terminal to be used and information on the contents or the type of communication designated by the call connection request or the session establishment request, from information correlated with public identification information of the group or the network, selects at least one connection path from the group or the network to the mobile communication network and at least one communication terminal to be used in the communication, and executes a call connection or a session connection between the selected communication terminal and the first communication terminal through the selected connection path.

21. The communication control device as defined in claim 19 or 20, further comprising:
a means of dividing the requested call connection or the session establishment into a plurality of call connections or sessions to a plurality of communication terminals that constitute the group or the network depending on the priority information of the connection path and the communication terminal to be used and information on the contents or the type of the communication, and connecting the connections or the sessions.

22. The communication control device as defined in any one of claims 19 to 21, wherein
when a call connection request or a session establishment request is executed that designates public identification information that identifies any one of the communication terminals constituting the group or the network, the session controlling means accepts the call connection request or the session establishment request, refers to the public identification information designated from the subscriber information and information correlated with the public identification information managed by the subscriber information management means, selects at least one of the communication terminals constituting the group or the network, and executes a call connection or a session connection between the selected communication terminal and the first communication terminal using public identification information of the selected communication terminal.

23. The communication control device as defined in claim 22, comprising
a means of determining public identification information that identifies the group or the network constituted by the communication terminal designated from the subscriber information managed by the subscriber information management means when the session controlling means has received a call connection request or a session establishment request that designates public identification information that identifies any one of the communication terminals constituting the group or the network, wherein
the session controlling means refers to the public identification information determined from the subscriber information and information correlated with the public identification information.

24. A communication control device that controls a connection between communication terminals in a mobile communication network, comprising:
a means of managing one or more pieces of public identification information to identify a group that a communication terminal connectable to the mobile communication network constitutes together with other communication terminals;
a means of accepting a call connection request or a session connection request that designates public identification information that identifies the group from a first communication terminal;
a means of selecting at least one communication terminal of the communication terminals constituting the group from public identification information that identifies the group; and
a means of sending to the communication terminal a call connection request or a session connection request that designates public identification information comprising address information used when a connection is requested to the selected communication terminal.

25. The communication control device as defined in claim 24, wherein
the communication control device of the public identification information manages public identification information of each of the communication terminals constituting the group correlating the public identification information with public identification information to identify the group, selects at least one piece of public identification information from public identification information of each of the communication terminals correlated with public identification information that identifies the group when the communication control device receives a call connection request or a session connection request that designates public identification information that identifies the group, and sends a call connection request or a session connection request that designates the public identification information.

26. The communication control device as defined in claim 24 or 25, wherein
the other communication terminals that constitute the group together with the communication terminal are communication terminals that constitute a network by being connected to the communication terminal and wherein
one or more pieces of public identification information for the group are public identification information that identify the network.

27. The communication control device as defined in claim 26, wherein
session establishment condition information that indicates the contents and the type of sessions that can be processed and/or used by each of the communication terminals constituting the group or the network is managed being correlated with the public identification information to identify the group or the network, and the session establishment condition information is referred to when at least one communication terminal is selected.

28. The communication control device as defined in claim 26 or 27, wherein
profile information that includes the attributes of services that can be used by the group or the network is managed, being correlated with the public identification information to identify the group or the network and wherein
when a call connection request or a session connection request that designates public identification information that identifies the group or the network is received, the profile information is referred to and a communication terminal is selected that can provide the requested call connection or session connection.

29. The communication control device as defined in claim 27, wherein
when a call connection request or a session connection request that designates public identification information that identifies the group or the network is received, the session establishment condition information is referred to, the plurality of communication terminals constituting the group or the network are selected, and the call connection request or the session connection request that designates public identification information of the communication terminals is sent and, thereby, the received call connection request or session connection request is divided into a plurality of calls or sessions respectively having different types and the divided calls or sessions are connected to the plurality of communication terminals.

30. The communication control device as defined in claim 26, wherein
when a call connection request or a session connection request that designates public identification information that identifies the group or the network is received, public identification information of all the communication terminals correlated with public identification information that identifies the group or the network is referred to, and a call connection request or a session connection request that designates public identification information of the communication terminal is sent to each of all the communication terminals.

31. The communication control device as defined in claim 30, wherein
at least one of the communication terminals that has responded to the call connection request or the session connection request to each of all the communication terminals constituting the group or the network is selected, and a call connection or a session connection with the selected communication terminal is executed.

32. The communication control device as defined in any one of claims 24 to 31, wherein
when a call connection request or a session connection request that designates public identification information that identifies any one of the communication terminals constituting the group or the network is received, at least one of the communication terminals constituting the group or the network that is correlated with the public identification information is selected, and a call connection request or a session connection request that designates public identification information of the selected communication terminal is sent.

33. The communication control device as defined in claim 32, further comprising
a means of determining public identification information that identifies the group or the network that is correlated with the public identification information when a call connection request or a session connection request that designates public identification information that identifies any one of the communication terminals constituting the group or the network is received.

34. A communication terminal that is connected to a mobile communication network and that has a means of requesting a call connection or a session connection with other communication terminals, comprising
a means, when the means requests to a group constituted by the other communication terminals a call connection or a session connection with any one of the other communication terminals constituting the group, of sending a call connection request or a session connection request that designates public identification information that identifies the group.

35. The communication terminal as defined in claim 34, wherein
at least one of the other communication terminals constituting the group is a first communication terminal that can connect to the mobile communication network, wherein
a network is constituted by connecting the first communication terminal and other communication terminals, and wherein
public identification information for the group is public identification information that identifies the network.

36. A communication control method of a communication control device comprising a means of managing/controlling a call connection or a session connection between communication terminals and a means of managing subscriber information of a mobile communication network, comprising the steps of:
having, including in the subscriber information, at least one piece of public identification information to identify a group that a communication terminal connectable to the mobile communication network constitutes to be able to network-connect to other communication terminals, correlating the public identification information with the communication terminal;
when a call connection request or a session establishment request is executed from a first communication terminal not included in the group or the network designating public identification information that identifies the group or the network, accepting the call connection request or the session establishment request;
referring to the public identification information designated from the subscriber information and information correlated with the public identification information;
selecting at least one of communication terminals constituting the group or the network; and
executing a call connection or a session connection between the selected communication terminal and the first communication terminal using public identification information of the selected communication terminal.

37. The communication control method as defined in claim 36, further comprising the steps of:
referring to priority information of a connection path and a communication terminal to be used and information on the contents or the type of communication designated by the call connection request or the session establishment request, from information correlated with public identification information of the group or the network;
selecting at least one connection path from the group or the network to the mobile communication network and at least one communication terminal to be used in the communication; and
executing a call connection or a session connection between the selected communication terminal and the first communication terminal through the selected connection path.

38. The communication control method as defined in claim 36 or 37, further comprising the steps of:
dividing the requested call connection or the session establishment into a plurality of call connections or sessions to a plurality of communication terminals that constitute the group or the network respectively depending on the priority information of the connection path and the communication terminal to be used and information on the contents or the type of the communication; and
connecting the connections or the sessions.

39. The communication control method as defined in any one of claims 36 to 38, further comprising the steps of:
when a call connection request or a session establishment request is executed that designates public identification information that identifies any one of the communication terminals constituting the group or the network, accepting the call connection request or the session establishment request;
referring to the public identification information designated from the subscriber information and information correlated with the public identification information;
selecting at least one of the communication terminals constituting the group or the network; and
executing a call connection or a session connection between the selected communication terminal and the first communication terminal using public identification information of the selected communication terminal.

40. The communication control method as defined in claim 39, further comprising the steps of:
determining public identification information that identifies the group or the network constituted by the communication terminal designated from the subscriber information when a call connection request or a session establishment request that designates public identification information that identifies any one of the communication terminals constituting the group or the network is received; and
referring to the determined public identification information and information correlated with the public identification information.

41. A communication control method of a communication control device that controls a connection between communication terminals in a mobile communication network, comprising the steps of:
managing and having one or more pieces of public identification information to identify a group that a communication terminal connectable to the mobile communication network constitutes together with other communication terminals;
accepting a call connection request or a session connection request that designates public identification information that identifies the group from a first communication terminal;
selecting at least one communication terminal of the communication terminals constituting the group from public identification information that identifies the group; and
sending to the communication terminal a call connection request or a session connection request that designates public identification information comprising address information used when a connection is requested to the selected communication terminal.

42. The communication control method as defined in claim 41, further comprising the steps of:
managing public identification information of each of the communication terminals constituting the group correlating the public identification information with public identification information to identify the group;
selecting at least one piece of public identification information from public identification information of each of the communication terminals correlated with public identification information that identifies the group when a call connection request or a session connection request that designates public identification information that identifies the group is received, and
sending a call connection request or a session connection request that designates the public identification information.

43. The communication control method as defined in claim 41 or 42, wherein
the other communication terminals that constitute the group together with the communication terminal are communication terminals that constitute a network by being connected to the communication terminal and wherein
one or more pieces of public identification information for the group are public identification information that identify the network.

44. The communication control method as defined in claim 43, further comprising the steps of:
managing session establishment condition information that indicates the contents and the types of sessions that can be processed and/or used by each of the communication terminals constituting the group or the network correlating the session establishment condition information with the public identification information to identify the group or the network; and
referring to the session establishment condition information when at least one communication terminal is selected.

45. The communication control method as defined in claim 43 or 44, further comprising the steps of:
managing profile information that includes the attributes of services that can be used by the group or the network, correlating the profile information with the public identification information to identify the group or the network;
when a call connection request or a session connection request that designates public identification information that identifies the group or the network is received, referring to the profile information; and
selecting a communication terminal that can provide the requested call connection or session connection.

46. The communication control method as defined in claim 44, further comprising the steps of:
when a call connection request or a session connection request that designates public identification information that identifies the group or the network is received, referring to the session establishment condition information;
selecting the plurality of communication terminals constituting the group or the network;
sending the call connection request or the session connection request that designates public identification information of the communication terminals;
thereby, dividing the received call connection request or session connection request into a plurality of calls or sessions respectively having different types; and
connecting the divided calls or sessions to the plurality of communication terminals.

47. The communication control method as defined in claim 43, further comprising the steps of:
when a call connection request or a session connection request that designates public identification information that identifies the group or the network is received, referring to public identification information of all the communication terminals correlated with public identification information that identifies the group or the network; and
sending a call connection request or a session connection request that designates public identification information of the communication terminal to each of all the communication terminals.

48. The communication control method as defined in claim 47, further comprising the steps of:
selecting at least one of the communication terminals that has responded to the call connection request or the session connection request to each of all the communication terminals constituting the group or the network; and
executing a call connection or a session connection with the selected communication terminal.

49. The communication control method as defined in any one of claims 41 to 48, further comprising the steps of:
when a call connection request or a session connection request that designates public identification information that identifies any one of the communication terminals constituting the group or the network is received, selecting at least one of the communication terminals constituting the group or the network that is correlated with the public identification information; and
sending a call connection request or a session connection request that designates public identification information of the selected communication terminal.

50. The communication control method as defined in claim 49, further comprising the step of
when a call connection request or a session connection request that designates public identification information that identifies any one of the communication terminals constituting the group or the network is received, determining public identification information that identifies the group or the network correlated with the public identification information.
